(19) Europäisches Patentamt / European Patent Office / Office européen des brevets

(11) **EP 4 209 966 A1**

(12) **EUROPEAN PATENT APPLICATION**
published in accordance with Art. 153(4) EPC

(43) Date of publication:
**12.07.2023 Bulletin 2023/28**

(21) Application number: **21877920.5**

(22) Date of filing: **01.10.2021**

(51) International Patent Classification (IPC):
**G06N 3/04** (2023.01)     **G06N 3/08** (2023.01)

(52) Cooperative Patent Classification (CPC):
**G06N 3/04; G06N 3/08**

(86) International application number:
**PCT/KR2021/013527**

(87) International publication number:
**WO 2022/075668 (14.04.2022 Gazette 2022/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.10.2020 KR 20200128876**

(71) Applicant: **Samsung Electronics Co., Ltd.**
**Suwon-si, Gyeonggi-do 16677 (KR)**

(72) Inventor: **PARK, Sungjae**
**Suwon-si, Gyeonggi-do 16677 (KR)**

(74) Representative: **Gulde & Partner**
**Patent- und Rechtsanwaltskanzlei mbB**
**Wallstraße 58/59**
**10179 Berlin (DE)**

(54) **ARTIFICIAL INTELLIGENCE MODEL DISTRIBUTED PROCESSING SYSTEM, AND METHOD FOR OPERATING SAME**

(57)     Provided is a method of performing, by a first electronic apparatus, distributed processing on an artificial intelligence model. The method includes obtaining performance information of a second electronic apparatus to perform distributed processing on the artificial intelligence model, obtaining a plurality of split models by splitting the artificial intelligence model, estimating, based on the performance information, a processing time for each of the plurality of split models to be processed by the second electronic device; determining, based on the estimated processing time, at least one split model which the second electronic apparatus is requested to process, from among the plurality of split models, and performing distributed processing on the artificial intelligence model by requesting processing of the determined at least one split model to the second electronic apparatus.

FIG. 1

**Description**

Technical Field

The disclosure relates to a system for performing distributed processing on an artificial intelligence model by using a plurality of apparatuses, and a method of operating the same.

Background Art

According to on-device artificial intelligence (AI) technology, various data may be processed based on an AI model provided in an electronic apparatus, without data transception with a cloud server. For example, the electronic apparatus may perform various operations in real time by using an AI model included in the electronic apparatus and a hardware configuration of the electronic apparatus, without the need to use the cloud server. Accordingly, according to the on-device AI technology, user-related data collected in the electronic apparatus is not transmitted to the outside, but is operated by the electronic apparatus itself, and thus, advantages exist in terms of protection of user personal information and data processing speed.
However, when the AI model is processed within the electronic apparatus according to the on-device AI technology, there is a drawback in that processing performance is limited depending on hardware provided in the electronic apparatus.
Accordingly, there is a demand for a method of processing an AI model in which limitation in processing performance due to hardware of the electronic apparatus can be minimized while maintaining advantages of the on-device AI technology in terms of protection of user personal information and data processing speed.

Disclosure

Technical Problem

The disclosure aims to resolve the problems described above and is to provide a system for performing distributed processing on an artificial intelligence (AI) model.
In addition, the disclosure is to provide a computer-readable recording medium having recorded thereon a program for executing the method, on a computer. The technical objectives to be achieved are not limited to those described above, and other technical objects may be present.

Technical Solution

According to an aspect of the disclosure, provided is a method of performing, by a first electronic apparatus, distributed processing on an artificial intelligence model. The method may include obtaining performance information of a second electronic apparatus to perform distributed processing on the artificial intelligence model, obtaining a plurality of split models by splitting the artificial intelligence model, estimating, based on the performance information, a processing time for each of the plurality of split models to be processed by the second electronic device, determining, based on the estimated processing time, at least one split model which the second electronic apparatus is requested to process, from among the plurality of split models, and performing distributed processing on the artificial intelligence model by requesting processing of the determined at least one split model to the second electronic apparatus.
The plurality of split models may be obtained by splitting the artificial intelligence model, based on the performance information.
The obtaining of the plurality of split models may include identifying at least one layer from among a plurality of layers included in the artificial intelligence models, as a layer for split, and obtaining the plurality of split models each comprising the identified layer as an output layer.
The layer for splitting the artificial intelligence model may be identified based on at least one of a size of data output from each of the layers, a data rate between the first electronic apparatus and the second electronic apparatus, and whether the layer may be processed in an accelerated manner by the second electronic apparatus.
The method for performing, by the first electronic apparatus, the distributed processing on the artificial intelligence model may further include receiving a processing result of the at least one split model from the second electronic apparatus, and updating the performance information of the second electronic apparatus based on information about a time for the second electronic apparatus to process the at least one split model, included in the processing result.
The first electronic apparatus may sequentially process the plurality of split models including the at least one split model which the second electronic apparatus is requested to process.
When a processing result of a split model for which processing is not yet completed is received from the second electronic apparatus while the plurality of split models are processed by the first electronic apparatus, processing may be sequentially performed from the split model for which the processing result is received from among the plurality of split models, based on the received processing result.

According to an aspect of the disclosure, provided is a method of performing, by a second electronic apparatus, distributed processing on an artificial intelligence model. The method may include, when at least one split model which the second electronic apparatus is requested to process is determined based on a processing time of the second electronic apparatus for a plurality of split models obtained by splitting the artificial intelligence model, the processing time being estimated based on performance information of the second electronic apparatus, receiving a processing request for the at least one split model from a first electronic apparatus, processing the at least one split model, and transmitting a result of the processing of the at least one split model to the first electronic apparatus, such that distributed processing is performed on the artificial intelligence model.

The processing time of the second electronic apparatus may further include a time consumed for the second electronic apparatus to receive the processing request for the at least one split model from the first electronic apparatus and a time estimated for a time consumed for the first electronic apparatus to receive the processing result of the at least one split model from the second electronic apparatus, in addition to the time consumed for the second electronic apparatus to process the plurality of split models.

The performance information of the second electronic apparatus may include at least one of hardware information provided in the second electronic apparatus and information about a state of the second electronic apparatus related to an operation processing capability of the second electronic apparatus.

When the processing request is received, the second electronic apparatus sequentially may process the split models of the artificial intelligence from the at least one split model, the split models including a split model for which a processing request is not received from the first electronic apparatus.

When a processing request for a split model for which processing is not yet started is received from the first electronic apparatus while the split models are sequentially processed by the second electronic apparatus, processing may be sequentially performed from the split model for which the processing request is received, based on the processing request.

When a processing request for a split model for which a processing result is most recently provided to the first electronic apparatus or a split model processed prior to the split model is received from the first electronic apparatus, the second electronic apparatus may retransmit, to the first electronic apparatus, the processing result of the split model most recently transmitted to the first electronic apparatus.

According to an aspect of the disclosure, provided is a system configured to perform distributed processing on an artificial intelligence model by using a plurality of electronic apparatuses. The system includes a first electronic apparatus configured to obtain performance information of a second electronic apparatus to perform distributed processing on the artificial intelligence model, obtain a plurality of split models by splitting the artificial intelligence model, estimate, based on the performance information, a processing time for each of the plurality of split models to be processed by the second electronic device, determine, based on the estimated processing time, at least one split model which the second electronic apparatus is requested to process from among the plurality of split models, and request processing of the determined at least one split model to the second electronic apparatus, such that distributed processing is performed on the artificial intelligence model, and the second electronic apparatus configured to, when at least one split model which the second electronic apparatus is requested to process is determined based on a processing time of the second electronic apparatus for the plurality of split models obtained by splitting the artificial intelligence model, the processing time being estimated based on the performance information of the second electronic apparatus, receive a processing request for the at least one split model from the first electronic apparatus, processes the at least one split model, and transmitting a result of the processing of the at least one split model to the first electronic apparatus, such that distributed processing is performed on the artificial intelligence model. The method may include obtaining performance information of a second electronic apparatus to perform distributed processing on the artificial intelligence model, obtaining a plurality of split models by splitting the artificial intelligence model, estimating, based on the performance information, a processing time for each of the plurality of split models to be processed by the second electronic device, determining, based on the estimated processing time, at least one split model which the second electronic apparatus is requested to process, from among the plurality of split models, and performing distributed processing on the artificial intelligence model by requesting processing of the determined at least one split model to the second electronic apparatus.

According to an aspect of the disclosure, provided is a computer-readable recording medium having recorded thereon a program for executing a method for performing distributed processing on a second electronic apparatus. The method may include, when at least one split model which the second electronic apparatus is requested to process is determined based on a processing time of the second electronic apparatus for a plurality of split models obtained by splitting the artificial intelligence model, the processing time being estimated based on performance information of the second electronic apparatus, receiving a processing request for the at least one split model from a first electronic apparatus, processing the at least one split model, and transmitting a result of the processing of the at least one split model to the first electronic apparatus, such that distributed processing is performed on the artificial intelligence model.

According to an aspect of the disclosure, provided is a first electronic apparatus configured to perform distributed processing on an artificial intelligence model. The electronic apparatus may include a memory storing the artificial intelligence model, at least one processor configured to obtain performance information of a second electronic apparatus to perform a distributed processing on the artificial intelligence model, obtain a plurality of split models by splitting the artificial intelligence model, estimate, based on the performance information, a processing time for each of the plurality of split models to be processed by the second electronic device, and determine, based on the estimated processing time, at least one split model which the second electronic apparatus is requested to process from among the plurality of split models, and a communicator configured to request processing of the at least one determined split model to the second electronic apparatus, such that distributed processing is performed on the artificial intelligence model.

The first electronic apparatus may sequentially process the plurality of split models, and, distributed processing may be performed on the artificial intelligence model based on a processing result first obtained by the first electronic apparatus from among a result obtained by sequentially processing the plurality of split models by the first electronic apparatus and a result obtained by processing the at least one split model by the second electronic apparatus.

According to an aspect of the disclosure, provided is a second electronic apparatus configured to perform distributed processing on an artificial intelligence model. The electronic apparatus includes a communicator configured to receive, from a first electronic apparatus, at least one split model from among a plurality of split models obtained by splitting the artificial intelligence model, based on a processing time of the second electronic apparatus for the plurality of split models, the processing time being estimated based on performance information of the second electronic apparatus, a memory storing the at least one split model, and at least one processor configured to process the at least one split model, and transmit the communicator to transmit, to the first electronic apparatus, a result of the processing of the at least one split model, such that distributed processing is performed on the artificial intelligence model.

When a processing request for a split model for which a processing result is most recently provided to the first electronic apparatus or a split model processed prior to the split model is received from the first electronic apparatus, the second electronic apparatus may retransmit, to the first electronic apparatus, the processing result of the split model most recently transmitted to the first electronic apparatus.

Description of Drawings

The contents described above and other aspects, features, and advantages of a particular embodiment of the disclosure will become more apparent by considering the detailed description and the accompanying drawings together.

FIG. 1 is a flowchart of a method of performing distributed processing on an artificial intelligence model by a first electronic apparatus and a second electronic apparatus, according to an embodiment of the disclosure.

FIG. 2 is a block diagram for describing internal configurations of the first electronic apparatus and the second electronic apparatus according to an embodiment of the disclosure.

FIG. 3 is a block diagram for describing an internal configuration of the first electronic apparatus according to an embodiment of the disclosure.

FIG. 4 is a block diagram for describing an internal configuration of the second electronic apparatus according to an embodiment of the disclosure.

FIG. 5 is a flowchart of a method of performing distributed processing on an AI model by the first electronic apparatus, according to an embodiment of the disclosure.

FIG. 6 is a flowchart of a method of performing distributed processing on an AI model by the second electronic apparatus, according to an embodiment of the disclosure.

FIG. 7 is a diagram of an example in which distributed processing is performed on an AI model by the first electronic apparatus and the second electronic apparatus, according to an embodiment of the disclosure.

FIG. 8 is a diagram of an example in which distributed processing is performed on an AI model by the first electronic apparatus and the second electronic apparatus by considering feedback, according to an embodiment of the disclosure.

FIG. 9 is a diagram illustrating an example in which data transmission fails when distributed processing is performed on an AI model by the first electronic apparatus and the second electronic apparatus, according to an embodiment of the disclosure.

FIG. 10 is a diagram illustrating an example in which data transmission fails when distributed processing is performed on an AI model by the first electronic apparatus and the second electronic apparatus, according to an embodiment of the disclosure.

FIG. 11 is a diagram illustrating an example in which data transmission fails when distributed processing is performed on an AI model by the first electronic apparatus and the second electronic apparatus, according to an embodiment of the disclosure.

FIG. 12 is a diagram illustrating an example in which distributed processing is performed on an AI model by the first electronic apparatus, the second electronic apparatus, and a third electronic apparatus.

Mode for Invention

Hereinafter, embodiments of the disclosure will be described in detail with reference to the accompanying drawings such that one of ordinary skill in the art may easily implement the disclosure. However, the disclosure may be implemented in various different forms and is not limited to the embodiments described herein. Also, in the drawings, parts irrelevant to the description are omitted in order to clearly describe the disclosure, and like reference numerals designate like elements throughout the specification.

Throughout the specification, when a part is "connected" to another part, the part may not only be "directly connected" to the other part, but may also be "electrically connected" to the other part with another element in between. In addition, when a part "includes" a certain element, the part may further include another element instead of excluding the other element, unless otherwise stated.

A function related to artificial intelligence according to the disclosure is operated through a processor and a memory. The processor may include one or more processors. The one or more processors may include a universal processor such as a central processing unit (CPU), an application processor (AP), a digital signal processor (DSP), etc., a dedicated graphic processor such as a graphics processing unit (GPU), a vision processing unit (VPU), etc., or a dedicated artificial intelligence processor, such as a neural processing unit (NPU). The one or more processors performs control such that input data is processed according to pre-defined operation rules or artificial intelligence models stored in a memory. Alternatively, when the one or more processors are processors dedicated to artificial intelligence, they may be designed with a hardware structure specialized for processing a specific artificial intelligence model.

The predefined operation rule or the AI model may be made through training. Specifically, the predefined operation rule or the AI model being made through training refers to the predefined operation rule or the AI model established to perform a desired feature (or an object) being made when a basic AI model is trained by a training algorithm with a lot of training data. Such training may be performed by the device itself in which artificial intelligence is performed according to the disclosure, or by a separate server and/or system. Examples of the learning algorithm may include supervised learning, unsupervised learning, semi-supervised learning, or reinforcement learning, but are not limited thereto.

The artificial intelligence model may include a plurality of neural network layers. Each of the plurality of neural network layers may have a plurality of weight values and perform neural network operation through operation between an operation result of the previous layer and the plurality of weight values. The plurality of weight values owned by the plurality of neural network layers may be optimized by training results of the artificial intelligence model. For example, the plurality of weight values may be updated to reduce or minimize a loss value or a cost value, which are obtained by the artificial intelligence model during a training procedure. An artificial neural network may include, for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or a deep Q-network, but is not limited thereto.

Hereinafter, the disclosure will be described in detail with reference to the accompanying drawings.

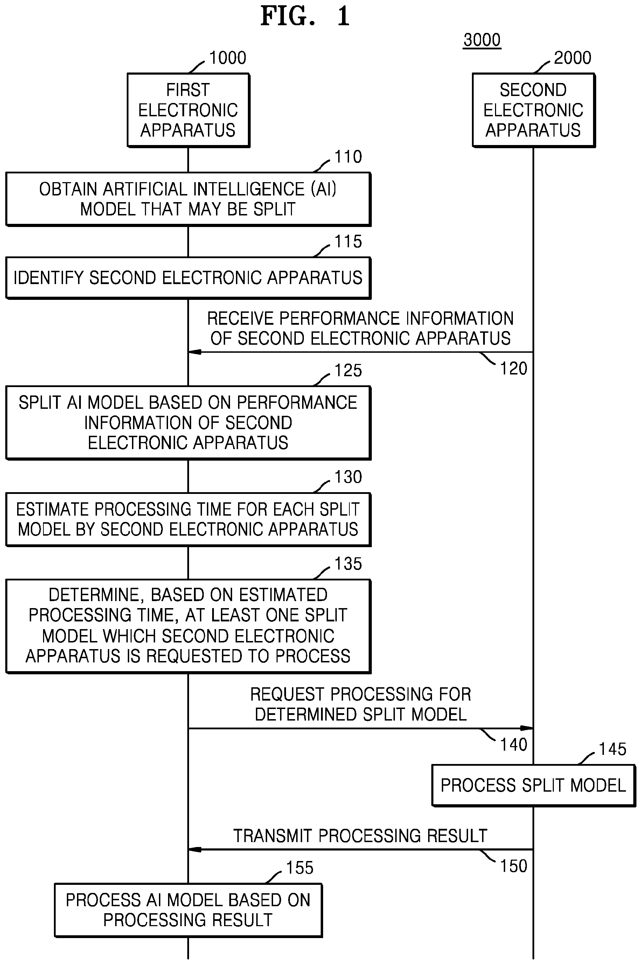

FIG. 1 is a flowchart of a method of performing distributed processing on an artificial intelligence (AI) model by a first electronic apparatus 1000 and a second electronic apparatus 2000, according to an embodiment of the disclosure.

Referring to FIG. 1, a system 3000 for performing distributed processing on the AI model according to an embodiment may include the first electronic apparatus 1000 and the second electronic apparatus 2000.

The first electronic apparatus 1000 according to an embodiment is capable of processing the AI model and performing various operations. For example, the first electronic apparatus 1000 may process the AI model according to a user's input and perform an operation, so that various services may be provided to the user.

In response to a request of the first electronic apparatus 1000, the second electronic apparatus 2000 according to an embodiment may process part of the AI model on behalf of the first electronic apparatus 1000 and transfer a result of the processing to the first electronic apparatus 1000. The first electronic apparatus 1000 according to an embodiment may process the AI model based on data received from the second electronic apparatus 2000.

Accordingly, distributed processing may be performed on the AI model according to an embodiment by not only the first electronic apparatus 1000 but also the second electronic apparatus 2000.

The first electronic apparatus 1000 and the second electronic apparatus 2000 according to an embodiment may be implemented in various forms. For example, the first electronic apparatus 1000 and the second electronic apparatus 2000 described in the disclosure may include digital cameras, smartphones, laptop computers, tablet personal computers (PC), electronic book terminals, terminals for digital broadcasting, personal digital assistants (PDA), portable multimedia players (PMP), navigations, MPEG-1 Audio Layer 3 (MP3) players, vehicles, TVs, refrigerators, robot cleaners, smart speakers, or the like, but are not limited thereto. The first electronic apparatus 1000 and the second electronic apparatus 2000 described in the disclosure may be wearable devices that may be worn by a user. The wearable device may include at least one of accessory-type devices (e.g., watches, rings, wristbands, ankle bands, necklaces, glasses, and contact lenses), head-mounted devices (HMD), fabric or clothes-integrated devices (e.g., electronic clothes), body attachable devices (e.g., skin pads), or bio-implantable devices (e.g., an implantable circuit), but is not limited thereto.

The AI model that may be processed in the system 3000 according to an embodiment may include models of various types that may be processed within the first electronic apparatus 1000 according to the on-device AI technology. For example, the AI model may include various types of models, such as a CNN, an RNN, and a DNN. In addition, the AI model according to an embodiment may be a combination of a plurality of AI models (e.g., CNN + CNN). Without being limited thereto, the AI model may include models of various types for performing various operations.

The first electronic apparatus 1000 according to an embodiment may identify the second electronic apparatus 2000 for performing distributed processing on the AI model, and perform distributed processing on the AI model by using the identified second electronic apparatus 2000. The first electronic apparatus 1000 according to an embodiment may request processing of part of the AI model to the identified second electronic apparatus 2000 such that distributed processing may be performed on the AI model.

The first electronic apparatus 1000 according to an embodiment may perform an operation of performing distributed processing on the AI model by using the second electronic apparatus 2000, according to operations 110 to 155 described below.

In operation 110, the first electronic apparatus 1000 according to an embodiment may obtain an AI model for which distributed processing is to be performed according to an embodiment. The AI model according to an embodiment may be an AI model that may be split into a plurality of split models so as to receive distributed processing by the second electronic apparatus 2000. For example, the AI model may be an AI model that includes a plurality of layers and may be split in units of layers. Without being limited thereto, the AI model may be variously split.

In operation 115, the first electronic apparatus 1000 according to an embodiment may identify the second electronic apparatus 2000 for performing distributed processing on the AI model.

For example, the second electronic apparatus 2000 may be identified among apparatuses which share an internal network, to which external access is limited, with the first electronic apparatus 1000 or are present in physically close locations. For example, when the first electronic apparatus 1000 is located in home and connected to a home network, the second electronic apparatus 2000 may be identified among home appliances (e.g., a TV, a refrigerator, a washing machine, and a robot cleaner) or electronic apparatuses (e.g., a desktop computer, a smart speaker, a smartphone, and a tablet), which are located in home and connected to the home network, similar to the first electronic apparatus 1000.

In addition, the second electronic apparatus 2000 according to an embodiment may be identified among apparatuses that have the capability to processing part of the AI model more quickly than the first electronic apparatus 1000. For example, when part of the AI model processed by the first electronic apparatus 1000 may be processed in an accelerated manner by a specific hardware apparatus, e.g., a GPU, an apparatus including the GPU may be identified as the second electronic apparatus 2000 perform distributed processing on the part of the AI model. In another example, an apparatus having the capability of processing the part of the AI model more quickly than the first electronic apparatus 1000 because an amount of operation of a process currently processed is less than that of the first electronic apparatus 1000 may be identified as the second electronic apparatus 2000.

Without being limited thereto, an apparatus suitable for performing distributed processing on the AI model may be identified as the second electronic apparatus 2000 according to various criteria.

In operation 120, the first electronic apparatus 1000 may obtain performance information of the second electronic apparatus 2000. For example, the first electronic apparatus 1000 may obtain performance information of the second electronic apparatus 2000 by requesting the performance information of the second electronic apparatus 2000 to the second electronic apparatus 2000 and receive the performance information from second electronic apparatus 2000. In another example, the first electronic apparatus 1000 may obtain the performance information of the second electronic apparatus 2000 from another external apparatus (e.g., a server device) in which the performance information of the second electronic apparatus 2000 is stored. In another example, the first electronic apparatus 1000 may pre-store the performance information of the second electronic apparatus 2000 in the memory and obtain the performance information of the second electronic apparatus 2000 from the memory.

Without being limited thereto, the first electronic apparatus 1000 may obtain the performance information of the second electronic apparatus 2000 in various ways.

The performance information of the second electronic apparatus 2000 according to an embodiment is information related to capability of the second electronic apparatus 2000 for processing each of the split models and may include, for example, performance of a processor (e.g., a CPU, a GPU, or the like) of the second electronic apparatus 2000, the number of processes currently processed, a processing speed, a remaining amount of battery, a memory size, and the like. Without being limited thereto, and the performance information of the second electronic apparatus 2000 may include various information related to a processing speed of the second electronic apparatus 2000 for processing the AI model, and performance, state, and the like of the second electronic apparatus 2000. In operation 125, the first electronic apparatus 1000 may obtain a plurality of split models by splitting the AI model based on the performance information of the second electronic apparatus 2000.

When the AI model according to an embodiment includes a plurality of layers, the AI model may be split in units of layers so that the split models may be obtained. A layer according to an embodiment may include at least one node, and may output data calculated according to a bias and weight value allocated to each node.

For example, when the AI model includes a first layer to a tenth layer, a split model including at least one of the first layer to the tenth layer may be obtained.

In addition, when the AI model according to an embodiment includes a combination of a plurality of AI models, a split model including at least one layer from among layers included in the plurality of AI models may be obtained.

The split model according to an embodiment is not limited to the example described above, and may be obtained by splitting the AI model in various units.

The split model according to an embodiment may be obtained according to whether each of the layers included in the AI model may be processed in an accelerated manner by the second electronic apparatus 2000 according to the performance information of the second electronic apparatus 2000. For example, a layer may be identified from among each of the layers included in the AI model according to whether the layer may be processed in an accelerated manner by the second electronic apparatus 2000, and the AI model may be split based on the identified layer such that a split model may be obtained. For example, a split model including at least one identified layer may be obtained.

In addition, without being limited to the performance information of the second electronic apparatus 2000, the split model according to an embodiment may be obtained according to a size of data output from each of the layers. For example, a layer of a preset ratio may be identified from among each of the layers included in the AI model according to an order from an output data having a less size, and the AI model may be split based on the identified layer such that the split model may be obtained. For example, at least one split model including at least one identified layer as an output layer of each split model may be obtained.

As the split model according to an embodiment is obtained such that the size of data output from each split model is minimized, an amount of data transmitted from the first electronic apparatus 1000 to the second electronic apparatus 2000 may be minimized. Accordingly, a delay in data transmission is minimized, and thus, distributed processing of the AI model according to an embodiment may be performed much more quickly.

The AI model according to an embodiment is not limited to the example described above and may be obtained from the AI model according to various methods.

In operation 130, the first electronic apparatus 1000 according to an embodiment may estimate a time for each split model to be processed by the second electronic apparatus 2000.

According to an embodiment, a time for each split model to be processed by the second electronic apparatus 2000 may be estimated based on the performance information of the second electronic apparatus 2000.

However, until the first electronic apparatus 1000 according to an embodiment receives processing result after requesting distributed processing of the AI model to the second electronic apparatus 2000, not only a time may be consumed to process each split model by the second electronic apparatus 2000, but also to transmit and receive data between the first electronic apparatus 1000 and the second electronic apparatus 2000.

Accordingly, according to an embodiment, in operation 130, a time consumed to transmit and receive data via a network between the first electronic apparatus 1000 and the second electronic apparatus 2000 may be further estimated in addition to a time for each split model to be processed by the second electronic apparatus 2000. For example, in addition to the time to process each split model by the second electronic apparatus 2000, a time consumed to transmit data for requesting processing of the split model to the second electronic apparatus 2000 from the first electronic apparatus 1000 and a time consumed to transmit a result of the processing of the split model from the second electronic apparatus 2000 to the first electronic apparatus 1000 may further be estimated. According to an embodiment, a time consumed for the data transception may further be estimated based on at least one of a current state of a network through which data is transceived between the first electronic apparatus 1000 and the second electronic apparatus 2000 and a size of the transceived data.

In operation 140 described below, the first electronic apparatus 1000 according to an embodiment may determine a split model which the second electronic apparatus 2000 is requested to process, based on a sum of the time for each split model to be processed by the second electronic apparatus 2000 and a time consumed for the data transmission.

In operation 135, the first electronic apparatus 1000 according to an embodiment may determine at least one split model which the second electronic apparatus 2000 is requested to process, based on the time estimated in operation 130.

The first electronic apparatus 1000 according to an embodiment may determine the at least one split model which the second electronic apparatus 2000 is requested to process, by comparing a value estimated for a time for each split model to be processed by the first electronic apparatus 1000 with the time value estimated in operation 130. From among the plurality of split models, the first electronic apparatus 1000 according to an embodiment may determine a split model in which the processing time estimated in operation 130 is less than the processing time estimated for the first electronic apparatus 1000 as a split model which the second electronic apparatus 2000 is requested to process.

Similar to the second electronic apparatus 2000, the time for each split model to be processed by the first electronic apparatus 1000 may be estimated based on performance information of the first electronic apparatus 1000, which includes performance of a processor (e.g., a CPU, a GPU, and the like) of the first electronic apparatus 1000, the number of processes currently processed, or the like.

Without being limited thereto, the first electronic apparatus 1000 may determine at least one split model which the second electronic apparatus 2000 is requested to process, according to various methods based on the processing time estimated in operation 130.

In operation 140, the first electronic apparatus 1000 according to an embodiment may transmit, to the second electronic apparatus 2000, data for requesting processing of the split model determined in operation 135.

In operation 140 according to an embodiment, the data transmitted to the second electronic apparatus 2000 may include data necessary for the second electronic apparatus 2000 to process the split model determined in operation 135. For example, the data may include data to be input to the split model determined in operation 135. In addition, the data may further include information for obtaining the split model determined in the operation 135, by the second electronic apparatus 2000.

The data to be input to the split model according to an embodiment may be obtained from data output from a preceding split model from among the plurality of split models. According to an embodiment, the remaining split models which the second electronic apparatus 2000 is not requested to process from among the plurality of split models may be processed by the first electronic apparatus 1000. In addition, in the plurality of split models according to an embodiment, each of the split models may be sequentially processed based on data output from a pre-processed split model, according to an order of processing of each of the split models.

Accordingly, the input data for the split model requested to the second electronic apparatus 2000, according to an embodiment may be obtained from the output data of a split model pre-processed by the first electronic apparatus 1000. However, when the split model which the second electronic apparatus 2000 is requested to process is first processed from among the plurality of split models, data input to the AI model may be obtained as input data for the split model which the second electronic apparatus 2000 is requested to process, according to a user input.

According to an embodiment, only when a split model is first processed by the first electronic apparatus before the at least one split model which the second electronic apparatus 2000 is requested to process, the input data to be transferred to the second electronic apparatus 2000 may be obtained. Accordingly, after a split model of a preceding processing order to the at least one split model which the second electronic apparatus 2000 is requested to process is first processed in the first electronic apparatus 1000, a processing request according to the operation of operation 140 may be transmitted.

Because the plurality of split models according to an embodiment are sequentially processed, in operation 140, a processing request for each of the split models may be transmitted one by one every time an order of processing of each of the split models comes.

Information for obtaining the split model by the second electronic apparatus 2000 according to an embodiment may include identification information indicating the split model. For example, the identification information may include model data included in the split model or information for obtaining data constituting the split model from the outside. Without being limited thereto, the second electronic apparatus 2000 may obtain the split model for which processing is requested in operation 140, according to various methods.

In operation 145, the second electronic apparatus 2000 may process the at least one split model according to the request of the first electronic apparatus 1000 received in operation 140. The second electronic apparatus 2000 according to an embodiment may process the split model every time the request of the first electronic apparatus 1000 is received in operation 140, and transmit a result thereof, in operation 150.

The distributed processing of the AI model according to an embodiment is for fast processing, and thus, it is desirable that the second electronic apparatus 2000 performs processing of the split model as soon as the request is received from the first electronic apparatus 1000 in operation 140. Accordingly, the second electronic apparatus 2000 may pre-obtain model data for constituting the at least one split model determined in operation 135, before the request is received from the first electronic apparatus 1000 in operation 140. For example, as the first electronic apparatus 1000 determines the at least one split model in operation 135, the first electronic apparatus 1000 may pretransmit, to the second electronic apparatus 2000, information for obtaining the at least one determined split model by the second electronic apparatus 2000. Without being limited thereto, the second electronic apparatus 2000 may pre-obtain the split model according to various methods, before a processing request for each split model is received from the first electronic apparatus 1000 in operation 140.

In operation 150, the second electronic apparatus 2000 may transmit a result of the processing of the split model to the first electronic apparatus 1000. In this case, the second electronic apparatus 2000 may transmit, to the first electronic apparatus 1000, information about a time consumed to process the split model together. The information about the processing time transferred from the second electronic apparatus 2000 may be used to update the performance information of the second electronic apparatus 2000 by the first electronic apparatus 1000.

The first electronic apparatus 1000 according to an embodiment may update the performance information of the second electronic apparatus 2000, every time when the information about a processing time transferred from the second electronic apparatus 2000 is received in operation 150. In addition, the first electronic apparatus 1000 may re-perform operations of operations 130 and 135 on the split model that is not yet processed, based on the updated performance information. Accordingly, the first electronic apparatus 1000 may re-determine whether to request processing of a split model to the second electronic apparatus 2000, according to the performance information of the second electronic apparatus 2000 updated in real time.

In operation 155, the first electronic apparatus 1000 according to an embodiment may process the AI model based on the result of the processing of the split model received in operation 150. According to an embodiment, because the split model estimated to consume a less processing time by the second electronic apparatus 2000 than the first electronic apparatus 1000 from among the split models obtained by splitting the AI model is processed by the second electronic apparatus 2000, the processing time of the AI model may be reduced. In addition, without being limited to a resource of the first electronic apparatus 1000, a resource of the second electronic apparatus 2000 may be additionally used to process the AI model, and thus, the resource of the first electronic apparatus 1000, e.g., a battery, an operation amount, or the like, may be saved.

Without being limited to one second electronic apparatus 2000, the first electronic apparatus 1000 according to an embodiment may identify and use a plurality of second electronic apparatuses to perform distributed processing. According to an embodiment, the first electronic apparatus 1000 may estimate a processing time for each split model based on performance information of each of the plurality of second electronic apparatuses, and transmit a processing request for the split model to the plurality of second electronic apparatuses.

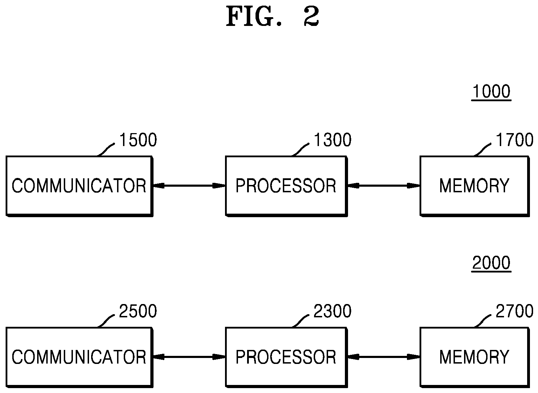

FIG. 2 is a block diagram for describing internal configurations of the first electronic apparatus 1000 and the second electronic apparatus 2000 according to an embodiment of the disclosure.

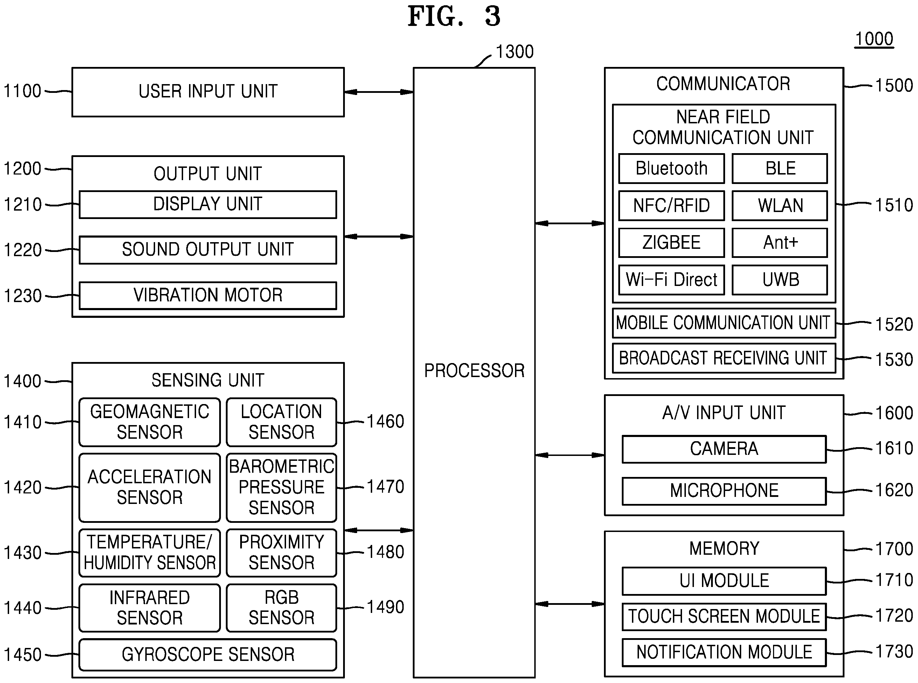

FIG. 3 is a block diagram for describing an internal configuration of the first electronic apparatus 1000 according to an embodiment of the disclosure.

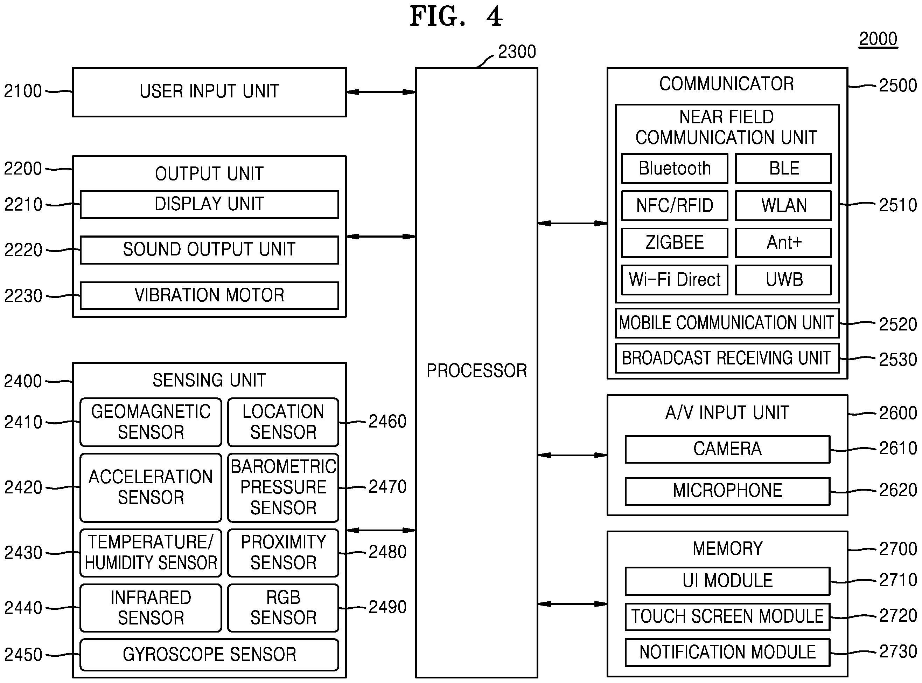

FIG. 4 is a block diagram for describing an internal configuration of the second electronic apparatus 2000 according to an embodiment of the disclosure.

Referring to FIG. 2, the first electronic apparatus 1000 and the second electronic apparatus 2000 may include processors 1300 and 2300, communicators 1500 and 2500, and memory 1700 and 2700. However, not all elements shown in FIG. 2 are necessarily essential for the first electronic apparatus 1000 or the second electronic apparatus 2000. The first electronic apparatus 1000 or the second electronic apparatus 2000 may be implemented by more elements than those shown in FIG. 2, and the first electronic apparatus 1000 or the second electronic apparatus 2000 may be implemented by less elements than those shown in FIG. 2.

For example, as shown in FIG. 3, the first electronic apparatus 1000 according to an embodiment may further include a user input unit 1100, an output unit 1200, a sensing unit 1400, and an A/V input unit 1600, in addition to the processor 1300, the communicator 1500, and the memory 1700.

In addition, as shown in FIG. 4, the second electronic apparatus 2000 according to an embodiment may further include a user input unit 2100, an output unit 2200, a sensing unit 2400, and an A/V input unit 2600, in addition to the processor 2300, the communicator 2500, and the memory 2700.

The user input units 1100 and 2100 denote means for inputting data for controlling the first electronic apparatus 1000 or the second electronic apparatus 2000 by a user. For example, the user input units 1100 and 2100 may include a key pad, a dome switch, a touch pad (a touch capacitive method, a pressure resistive film method, an infrared detection method, a surface ultrasonic conduction method, an integral type tension measurement method, a piezo effect method, etc.), a jog wheel, a jog switch, or the like, but are not limited thereto.

According to an embodiment, the user input unit 1100 of the first electronic apparatus 1000 may receive an input of a user that includes a request for processing an AI model and performing an operation. According to an embodiment, because the input of the user including an operation request is received via the user input unit 1100, distributed processing of the AI model may be performed by the first electronic apparatus and the second electronic apparatus.

In addition, the user input unit 2100 of the second electronic apparatus 2000 may receive a user input related to an operation of performing distributed processing on the AI model. For example, the user input unit 2100 may receive a user input for performing distributed processing on the AI model, according to a request of the first electronic apparatus 1000. Without being limited to the example described above, the distributed processing of the AI model by the second electronic apparatus 2000 may be performed according to the request of the first electronic apparatus 1000 without a user input.

The output units 1200 and 2200 may output an audio signal, a video signal, or a vibration signal, and may include display units 1210 and 2210, sound output units 1220 and 2220, and vibration motors 1230 and 2230.

The output units 1200 and 2200 according to an embodiment may output a result of performance of the distributed processing by the first electronic apparatus 1000 and the second electronic apparatus 2000.

The display units 1210 and 2210 may display and output information processed in the first electronic apparatus 1000 or the second electronic apparatus 2000. According to an embodiment, the display unit 1210 of the first electronic apparatus 1000 may display a result of performance of the distributed processing of the AI model by the first electronic apparatus 1000 and the second electronic apparatus 2000. In addition, the display unit 2210 of the second electronic apparatus 2000 may display information related to distributed processing of the AI model performed by the second electronic apparatus 2000.

For example, the display units 1210 and 2210 of the first electronic apparatus 1000 and the second electronic apparatus 2000 may display information indicating that distributed processing of the AI model is in progress. In addition, regarding the distributed processing operation currently performed, the display units 1210 and 2210 may display information, such as an amount of current consumed by the first electronic apparatus 1000 or the second electronic apparatus 2000, or a time consumed in processing, an electronic apparatus currently connected. Without being limited to the example described above, information of various types related to distributed processing of the AI model may be displayed on the display units 1210 and 2210.

Meanwhile, when the display units 1210 and 2210 and a touch pad form a layer structure and are configured in a touch screen, the display units 1210 and 2210 may also be used as input devices in addition to output devices. The display units 1210 and 2210 may include at least one of a liquid crystal display, a thin film transistor-liquid crystal display, an organic light-emitting diode, a flexible display, a three-dimensional (3D) display, and an electrophoretic display. In addition, depending on the embodiment of the first electronic apparatus 1000 or the second electronic apparatus 2000, the first electronic apparatus 1000 or the second electronic apparatus 2000 may include two or more display units 1210 and 2210.

The sound output units 1220 and 2220 may output audio data received from the communicators 1500 and 2500 or stored in the memory 1700 and 2700.

The vibration motors 1230 and 2230 may output a vibration signal. In addition, the vibration motor 1230 may output a vibration signal when a touch input is received on the touch screen.

The sound output units 1220 and 2220 and the vibration motors 1230 and 2230 according to an embodiment may output, in various forms (e.g., a voice, a vibration signal, etc.), information related to a distributed processing operation of the AI model by the first electronic apparatus 1000 and the second electronic apparatus 2000.

In general, the processors 1300 and 2300 may control overall operations of the first electronic apparatus 1000 or the second electronic apparatus 2000. For example, the processors 1300 and 2300 may execute programs stored in the memory 1700 and 2700 and comprehensively control the user input units 1100 and 2200, the output units 1200 and 2200, the sensing units 1400 and 2400, the communicators 1500 and 2500, the audio/video (A/V) input units 1600 and 2600, or the like.

The first electronic apparatus 1000 and the second electronic apparatus 2000 may include at least one processor 1300 and 2300. For example, the first electronic apparatus 1000 may include a processor of various types, such as a CPU, a GPU, or an NPU.

The processors 1300 and 2300 may be configured to perform basic arithmetic, logic, and input/output operations, thereby processing commands of a computer program. The command may be provided to the processors 1300 and 2300 from the memory 1700 and 2700, or may be received via the communicators 1500 and 2500 and provided to the processors 1300 and 2300. For example, the processors 1300 and 2300 may be configured to execute the command according to a program code stored in a recording medium, such as memory.

The processor 1300 of the first electronic apparatus 1000 according to an embodiment may obtain a plurality of split models by splitting an AI model, and identify the second electronic apparatus 2000 to process at least one split model. According to an embodiment, the AI model may be split based on performance information of the second electronic apparatus 2000 in which distributed processing of the AI model is to be performed.

For example, the processor 1300 may identify at least one layer from among a plurality of layers included in the AI model as a layer for split, and obtain a plurality of split models each including the identified layer as an output layer, so that the AI model may be split.

The processor 1300 according to an embodiment may estimate a processing time for each of the split models to be processed by the second electronic apparatus 2000, based on the performance information of the second electronic apparatus 2000. In addition, at least one split model which the second electronic apparatus 2000 is requested to process may be determined based on the estimated processing time. The processor 1300 according to an embodiment may request processing of the at least one determined split model to the second electronic apparatus 2000, so that distributed processing may be performed on the AI model.

When a result of the processing of the at least one split model is received from the second electronic apparatus 2000, the processor 1300 according to an embodiment may update the performance information of the second electronic apparatus 2000 based on information about a time for the second electronic apparatus 2000 to process the at least one split model, included in the processing result.

In addition, when a processing request for at least one split model from among split models of the AI model for which distributed processing is to be performed is received from the first electronic apparatus 1000, the processor 2300 of the second electronic apparatus 2000 according to an embodiment may process the at least one split model. The processing request for the split model of the first electronic apparatus 1000 according to an embodiment may be transmitted to the second electronic apparatus 2000 as the processing time of the second electronic apparatus 2000 for each of the split models is estimated based on the performance information of the second electronic apparatus 2000.

The processor 2300 according to an embodiment may control the communicator 1500 to transmit a result of the processing of the at least one split model to the first electronic apparatus 1000, so that distributed processing of the AI model may be performed by the second electronic apparatus 2000.

The sensing units 1400 and 2400 may detect states of the first electronic apparatus 1000 and the sensing units 1400 and 2400 or peripheral states of the first electronic apparatus 1000 and the sensing units 1400 and 2400, and transmit the detected information to the processors 1300 and 2300.

The sensing units 1400 and 2400 may include at least one of geomagnetic sensors 1410 and 2410, acceleration sensors 1420 and 2420, temperature/humidity sensors 1430 and 2430, infrared sensors 1440 and 2440, gyroscope sensors 1450 and 2450, location sensors (e.g., a global positioning system (GPS)) 1460 and 2460, barometric pressure sensors 1470 and 2470, proximity sensors 1480 and 2480, and RGB sensors (illuminance sensors) 1490 and 2490, but are not limited thereto.

The sensing units 1400 and 2400 according to an embodiment may detect sensing information of various types, which may be used to process the AI model by the first electronic apparatus 1000 and the second electronic apparatus 2000. For example, information detected by the sensing unit 1400 of the first electronic apparatus 1000 may be used as input information of the AI model. Without being limited thereto, the information detected by the sensing units 1400 and 2400 may be used in various methods to process of the AI model.

The communicators 1500 and 2500 may include one or more elements that enable communication between the first electronic apparatus 1000 and the second electronic apparatus 2000 or communication with respect to another external apparatus (not shown). For example, the communicators 1500 and 2500 may include near field communication units 1510 and 2510, mobile communication units 1520 and 2520, and broadcast receiving units 1530 and 2530.

Short-range communication units 1510 and 2510 may include a Bluetooth communication unit, a Bluetooth Low Energy (BLE) communication unit, a near field communication unit a wireless local area network (WLE) communication unit, a Zigbee communication unit, an infrared Data Association (IrDA) communication unit, a wireless fidelity (Wi-Fi) Direct (WFD) communication unit, a ultra wideband (UWB) communication unit, an Ant+ communication unit, or the like, but are not limited thereto.

The mobile communication units 1520 and 2520 may transmit and receive wireless signals to and from at least one of a base station, an external terminal, and a server, on a mobile communication network. Here, the wireless signal may include data of various forms according to a voice call signal, a video call signal, or transmission and reception of text/multimedia messages.

The broadcast receiving units 1530 and 2530 may receive a broadcast signal and/or broadcast-related information on a broadcast channel. The broadcast channel may include a satellite channel and a terrestrial channel. Depending on the embodiment, the first electronic apparatus 1000 may not include the broadcast receiving unit 1530.

The communicator 1500 of the first electronic apparatus 1000 according to an embodiment may transmit and receive data to and from the second electronic apparatus 2000 for performing distributed processing on the AI model. For example, the communicator 1500 may receive the performance information of the second electronic apparatus 2000 from the second electronic apparatus 2000. In addition, the communicator 1500 may transmit, to the second electronic apparatus 2000, a processing request for at least one split model from among models obtained by splitting the AI model. Without being limited thereto, the communicator 1500 may transmit and receive data necessary for performing distributed processing on the AI model according to an embodiment.

In addition, the communicator 2500 of the second electronic apparatus 2000 according to an embodiment may transmit and receive data to and from the first electronic apparatus 1000 for performing distributed processing on the AI model. For example, the communicator 2500 may transmit the performance information of the second electronic apparatus 2000 to the first electronic apparatus 1000. In addition, the communicator 2500 may receive, from the first electronic apparatus 1000, a processing request for the at least one split model from among the models obtained by splitting the AI model. Without being limited thereto, the communicator 2500 may transmit and receive data necessary for performing distributed processing on the AI model, according to an embodiment.

The A/V input units 1600 and 2600, which are for inputting an audio signal or a video signal, may include cameras 1610 and 2610 and microphones 1620 and 2620. The cameras 1610 and 2610 may obtain an image frame, such as a still image or moving image, through an image sensor in a video call mode or a shooting mode. An image captured through the image sensor may be processed through the processors 1300 and 2300 or an additional image processing unit (not shown).

The microphones 1620 and 2620 receive an external acoustic signal and process the received acoustic signal to electrical voice data.

The A/V input units 1600 and 2600 according to an embodiment may obtain data of various types that may be used to process the AI model by the first electronic apparatus 1000 and the second electronic apparatus 2000. For example, voice data or image data obtained by the A/V input unit 1600 of the first electronic apparatus 1000 may be used as input information of the AI model. Without being limited thereto, the data obtained by the A/V input units 1600 and 2600 may be used in various methods to process the AI model.

The memory 1700 and 2700 may store programs for processing and controlling by the processors 1300 and 2300, and may store data input to the first electronic apparatus 1000 or the second electronic apparatus 2000 or output from the first electronic apparatus 1000 or the second electronic apparatus 2000.

The memory 1700 of the first electronic apparatus 1000 according to an embodiment may store the AI model for which distributed processing is performed by the first electronic apparatus 1000 and the second electronic apparatus 2000. In addition, the memory 1700 may store at least one split model obtained by splitting the AI model. In addition, the memory 1700 may store data, such as an engine, an algorithm, or a program, which may be used to process the AI model.

The memory 2700 of the second electronic apparatus 2000 according to an embodiment may store at least one split model of the AI model that is processed by the second electronic apparatus 2000. The second electronic apparatus 2000 according to an embodiment may process the at least one split model stored in the memory 2700 in response to a processing request of the first electronic apparatus 1000, so that distributed processing may be performed on the AI model.

The memory 1700 and 2700 according to an embodiment is not limited to the example described above, and may store data of various types that are necessary to process the AI model.

The memory 1700 and 2700 may include a storage medium of at least one type from among a flash memory type, a hard disk type, a multimedia card micro type, a card type memory (e.g., secure digital (SD) or extreme digital (XD) memory), random access memory (RAM), static RAM (SRAM), read-only memory (ROM), electrically erasable programmable ROM (EEPROM), programmable ROM (PROM), magnetic memory, a magnetic disk, or an optical disk.

The programs stored in the memory 1700 and 2700 may be classified into a plurality of modules according to functions thereof, and for example, may be classified into user interface (UI) modules 1710 and 2710, touch screen modules 1720 and 2720, notification modules 1730 and 2730, and the like.

The UI modules 1710 and 2710 may provide a specialized UI, graphical user interface (GUI), or the like, which are interlocked with the first electronic apparatus 1000 and the second electronic apparatus 2000, for each application. The touch screen modules 1720 and 2720 may detect a user's touch gesture on a touchscreen and transfer information about the touch gesture to the processors 1300 and 2300. The touch screen modules 1720 and 2720 according to some embodiments of the disclosure may recognize and analyze a touch code. The touch screen modules 1720 and 2720 may be configured in additional hardware including a controller.

To detect a touch or a proximity touch on the touchscreen, various sensors may be provided in or around the touchscreen. A tactile sensor is an example of a sensor for detecting the touch on the touchscreen. The tactile sensor refers to a sensor for sensing contact of a specific object to a degree or more than a person can feel. The tactile sensor may detect various information, such as roughness of a contact surface, rigidity of a contact object, or a temperature of a contact point.

The touch gesture of the user may include a tap, a touch and hold, a double tap, a drag, a panning, a flick, a drag-and-drop, a swipe, and the like.

The notification modules 1730 and 2730 may generate signals for notifying an event occurring in the first electronic apparatus 1000 and the second electronic apparatus 2000.

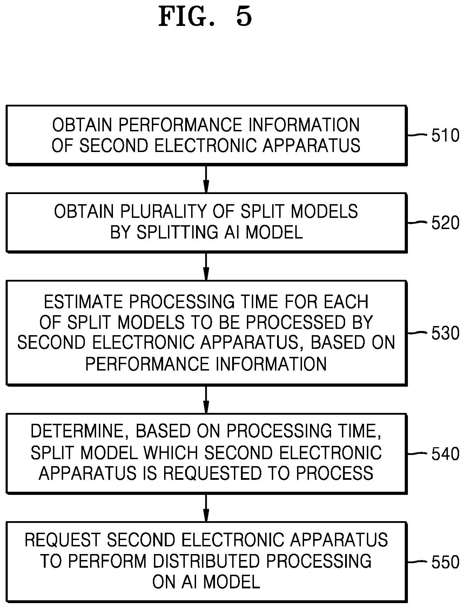

FIG. 5 is a flowchart of a method of performing distributed processing on the first electronic apparatus 1000, according to an embodiment of the disclosure.

According to an embodiment, when the AI model is processed according to a user input, the first electronic apparatus 1000 may process the AI model more quickly by using the second electronic apparatus 2000.

Referring to FIG. 5, in operation 510, the first electronic apparatus 1000 according to an embodiment may obtain performance information of the second electronic apparatus 2000 to perform distributed processing on the AI model by using the second electronic apparatus 2000. The first electronic apparatus 1000 according to an embodiment may request the performance information of the second electronic apparatus 2000 to the second electronic apparatus 2000 and obtain the performance information of the second electronic apparatus 2000, so that distributed processing may be performed on the AI model by using the second electronic apparatus 2000. Without being limited thereto, the first electronic apparatus 1000 may obtain the performance information of the second electronic apparatus 2000 from another external apparatus.

In operation 520, the first electronic apparatus 1000 according to an embodiment may obtain a plurality of split models by splitting the AI model.

According to an embodiment, at least one layer from among the plurality of layers included in the AI model is identified as a layer for split, and a plurality of split models each including the identified layer as an output layer, so that the AI model may be split into the plurality of split models.

In addition, the layer for splitting the AI model according to an embodiment may be identified based on at least one of a size of data output from each of the layers, a data rate between the first electronic apparatus 1000 and the second electronic apparatus 2000, and whether the layer may be processed in an accelerated manner by the second electronic apparatus 2000.

According to an embodiment, the AI model may be split according to the size of the data output from each of the plurality of layers included in the AI model. For example, layers of the top N % having the smallest size of output data may be identified, and the AI model may be split based on the identified layers. For example, when the total number of layers included in the AI model is 100 and N is preset to 20, the AI model may be split such that the top 20 layers having the least output data size become an output layer of each split model.

In another example, each of the layers may be identified as an output layer of each split model based on a weight value determined for each layer, according to an order of operation of each layer. For example, when the total number of layers included in the AI model is 100 and N is preset to 20, the top 20 layers, in which a product of the output data size of each layer and the weight value determined according to the operation order of each layer is smallest, may be identified as an output layer of each split model. According to an embodiment, the AI model may be split such that the identified layer becomes the output layer of each split model.

The weight value determined for each layer according to the order of operation may be determined to have a less value for a layer located earlier in the operation processing order. Accordingly, the weight value may be determined such that a layer located earlier in the operation processing order has a higher possibility of being identified as an output layer. For example, when a total of 102 layers are present, from among 100 layers excluding a first layer and a last layer, a layer processed in a first order may have a weight value of 1, and a layer processed in a 100th order may have a weight value of 100. The weight determined according to the operation order may be differently set depending on the order of each layer, but is not limited thereto, and may all be set to a same value.

According to an embodiment, the AI model may be split such that data transmission for distributed processing of the AI model may be performed within a preset time, according to a data rate between the first electronic apparatus 1000 and the second electronic apparatus 2000. For example, in a network where 100 MB may be transmitted per second, when a data rate between the first electronic apparatus 1000 and the second electronic apparatus 2000 for distributed processing of the AI model is limited within 0.1 second, an output layer of each split model may be identified such that the sum of output data of each layer becomes 10 MB. For example, a layer for split may be identified in the order from a layer having a less size of output data until the sum of the output data of the identified layer becomes 10 MB, and the AI model may be split such that the identified layer becomes an output layer of each split model.

The AI model according to an embodiment may be split based on the performance information of the second electronic apparatus 2000. For example, the AI model may be split according to whether a layer from among the plurality of layers included the AI model is a layer that may be processed in an accelerated manner by the second electronic apparatus 2000.

According to an embodiment, when the plurality of layers included in the AI model are sequentially processed, it may be determined within a range of the top R % as to whether a layer may be processed in an accelerated manner by the second electronic apparatus 2000, and the AI model may be split based on the identified layer. Whether the layer may be processed in an accelerated manner may be identified according to whether the layer may be processed by the second electronic apparatus 2000 more quickly than the first electronic apparatus 1000.

For example, when the total number of layers included in the AI model is 100 and R is preset to 25, from among a layer processed in a first order to a layer processed in a 25th order, it may be identified whether a layer may be processed in an accelerated manner by the second electronic apparatus 2000, and the AI model may be split such that the identified layer becomes an output layer of each split model.

According to an embodiment, at least one layer from among the plurality of layers may be identified as an output layer of each split model, according to Mathematical Formula 1 shown below.

[Mathematical Formula 1]

$$S(m) = Sort(A) \times C\% + Sort(S0) \times D\% \text{, or}$$

$$S(m) = Sort(B \times t) \times C\% + Sort(S0) \times D\%$$

In Mathematical Formula 1, S(m) indicates layers identified as an output layer of each split model. In addition, Sort (A) may indicate at least one layer identified as a layer that may be quickly processed by the second electronic apparatus 2000, within a range of the top R %. In addition, Sort (S0) may indicate at least one layer identified as a layer of the top N % having a least output data size. In addition, Sort(B x t) may denote at least one layer identified such that data transmission for distributed processing of the AI model may be performed within a preset time. In addition, C and D may be values that are preset such that distributed processing may be performed on the AI model.

According to an embodiment, the disclosure is not limited to the method according to Mathematical Formula 1, and at least one layer from among the plurality of layers may be identified as an output layer of each split model.

[Mathematical Formula 2]

$$S(m) = WeightedSort\ (Sort(A) \times a + Sort(S0) \times b + Sort(B \times t) \times c\ ) \times N\%$$

In Mathematical Formula 2, S(m) indicates layers identified as an output layer of each split model.

Referring to Mathematical Formula 2, at least one layer may be identified in each of Sort(A), Sort(SO), and Sort(B x t) described above with reference to Mathematical Formula 1. Layers identified in each of Sort(A), Sort(SO), and Sort(B x t) may be split into at least one group according to the number of duplicated identification of the layers in each Sort. For example, a first group may include a layer identified in all three Sorts, a second group may include a layer identified in two of the three Sorts, and a third group may include a layer identified in only one Sort.

The disclosure is not limited to the three Sorts described above, and as the layers are identified based on at least one Sort for identifying a layer, at least one layer may be classified into groups of various numbers.

According to an embodiment, each group may be arranged in an order from a greater number of being identified in a duplicated manner in each of Sorts. For example, arrangement may be performed in an order from a first group, which has a greatest number of duplicate identification, a second group, to a third group.

According to an embodiment, at least one layer may be arranged according to weight values of a, b, and c, within each group. According to an embodiment, at least one layer may be arranged based on a product of a value used to arrange each of the layers in each Sort and the weight values of a, b, and c. For example, layers identified in Sort(S0) or Sort(B x t) may be arranged based on a value obtained by calculating (e.g., multiplication) a size of output data of each layer and each of b and c. However, in Sort(A), because a layer is identified according to whether accelerated processing is possible, layers identified in Sort(A) have a same rank, and thus, at least one layer may be arranged based on an a value without an operation with another value. Without being limited thereto, in Sort(A), when a layer is identified by arranging each of the layers according to a speed at which the layers are processed in an accelerated manner, the layers may be arranged based on a value obtained by calculating a speed (or a reciprocal value of the speed) of accelerated processing by the second electronic apparatus and a.

According to an embodiment, a value obtained by performing calculation based on the weight values of a, b, c, or the like may be obtained such that the greater the speed at which a layer is processed in an accelerated manner by the second electronic apparatus 2000 or the smaller the output data of the layer, the higher the rank the layer is arranged within each group.

In addition, according to an embodiment, at least one layer may be arranged in the order from a least value obtained based on the weight values described above, but is not limited thereto, and may be aligned according to various methods and criteria.

For example, a layer identified in a duplicated manner in Sort(A) and Sort(S0) from among layers of the second group may be arranged within the second group based on a sum of a with a product of a size of output data of the layer and b. Without being limited thereto, layers may be arranged within a same group based on a value obtained in various methods based on a weight value.

According to an embodiment, according to Mathematical Formula 2, layers of the top N % from among the plurality of layers included in the AI model may be finally identified as layers for split, based on an order in which at least one layer is arranged. For example, 100 layers included in the AI model may be sequentially arranged based on Sort(A), Sort(SO), Sort(B x t), and a, b, and c, which area weight values of Sort(A), Sort(SO), and Sort(B x t), respectively, and the top N layers may be finally identified.

In Mathematical Formula 2, values of N, a, b, and c may be values that are preset such that distributed processing may be performed on the AI model.

Without being limited thereto, and the AI model may be split based on a layer at a location where a split for distributed processing is appropriate, according to characteristics of each of layers included in the AI model.

In operation 530, the first electronic apparatus 1000 according to an embodiment may estimate a processing time for each split model to be processed by the second electronic apparatus 2000, based on the performance information of the second electronic apparatus 2000.

The processing time according to an embodiment may be estimated to further include a time consumed for the second electronic apparatus 2000 to receive a processing request for at least one split model from the first electronic apparatus 1000, and a time estimated for a time consumed for the first electronic apparatus 1000 to receive a processing result of the at least one split model from the second electronic apparatus 2000, in addition to a time for which each split model is processed by the second electronic apparatus 2000.

A time consumed to transmit a result of processing of each split model, according to an embodiment may be estimated based on various pieces of network-related information, such as a transmission speed of the network and an average amount of data transmission and reception up to a previous N time.

The performance information of the second electronic apparatus 2000 according to an embodiment may include at least one of hardware information provided in the second electronic apparatus 2000 and information about a state of the second electronic apparatus 2000 related to an operation processing capability of the second electronic apparatus 2000. For example, the performance information may include available memory, an available storage space, a remaining amount of battery, performance information and state information (e.g., a use rate, an operation mode, an operation speed, or whether operable) of an operation processing device (e.g., a CPU, an NPU, or a GPU) provided in the second electronic apparatus 2000, the number of processors currently processed in the second electronic apparatus 2000, or the like.

In operation 540, the first electronic apparatus 1000 according to an embodiment may determine a split model which the second electronic apparatus 2000 is requested to process, based on the processing time determined in operation 530.

Operations 530 and 540 according to an embodiment may be performed on each split model every time when each of the split models included in the AI model is processed by the first electronic apparatus 1000. When the processing time estimated for a current split model in operation 530 is less than a processing time consumed when the split model is processed by first electronic apparatus 1000, the first electronic apparatus 1000 according to an embodiment may determine the current split model as a split model which the second electronic apparatus 2000 is requested to process.

In operation 550, the first electronic apparatus 1000 according to an embodiment may request, to the second electronic apparatus 2000, processing of the split model determined in operation 540, so that an operation of performing distributed processing on the AI model may be performed.

According to an embodiment, even when the current split model is determined as a split model which the second electronic apparatus 2000 is requested to process, an operation of processing the current split model may be performed by the first electronic apparatus 1000. According to an embodiment, when a processing request of the first electronic apparatus 1000 is not received by the second electronic apparatus 2000, depending on the network environment, or when a processing result of the split model is received later than the estimated processing time, or due to a state change of the first electronic apparatus 1000, the split model may be processed by the first electronic apparatus 1000 more quickly than the second electronic apparatus 2000. According to an embodiment, the split model which the second electronic apparatus 2000 is requested to process may be simultaneously processed by the first electronic apparatus 1000, so that stable processing of the AI model is possible, regardless of the network environment or even when a state of the first electronic apparatus 1000 or the second electronic apparatus 2000 is changed.

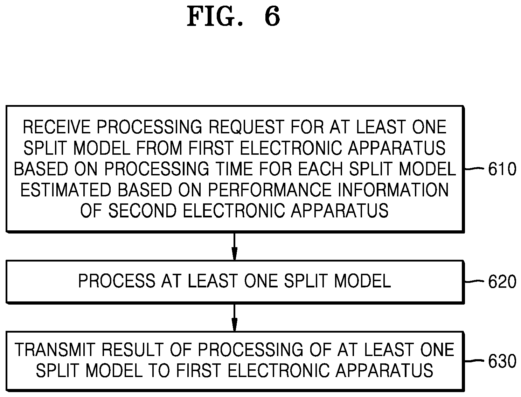

FIG. 6 is a flowchart of a method of performing distributed processing on the AI model by the second electronic apparatus 2000, according to an embodiment of the disclosure.

According to an embodiment, as the first electronic apparatus 1000 identifies the second electronic apparatus 2000 for performing distributed processing on the AI model, the first electronic apparatus 1000 and the second electronic apparatus 2000 may be connected to each other through a network.

In addition, before a processing request for at least one split model is received from the first electronic apparatus 1000 in operation 610, the second electronic apparatus 2000 according to an embodiment may pre-obtain model data for the at least one split model. For example, the second electronic apparatus 2000 may obtain, from the first electronic apparatus 1000, identification information of the AI model for which distributed processing is to be performed, and obtain model data of the AI model, thereby obtaining model data of the at least one split model.

Accordingly, the second electronic apparatus 2000 may quickly start processing of the split model as soon as the processing request for the split model is received from the first electronic apparatus 1000. Without being limited thereto, the second electronic apparatus 2000 may pre-obtain the model data for the at least one split model which the second electronic apparatus 2000 is requested to process, according to various methods.

Referring to FIG. 6, the second electronic apparatus 2000 according to an embodiment may receive the processing request for the at least one split model from the first electronic apparatus, in operation 610, and processes the at least one split model for which the processing request is received, in operation 620. The at least one split model for which the processing is requested from the first electronic apparatus 1000, according to an embodiment may be determined by estimating a processing time for each split model by the second electronic apparatus 2000 based on the performance information of the second electronic apparatus 2000.

The performance information of the second electronic apparatus 2000 according to an embodiment may include at least one of hardware information provided in the second electronic apparatus 2000 and information about a state of the second electronic apparatus 2000 related to an operation processing capability of the second electronic apparatus 2000.

In addition, the processing time according to an embodiment may be estimated by further including a time estimated for the second electronic apparatus 2000 to receive the processing request for the at least one split model, and a time estimated for a time consumed for the first electronic apparatus 1000 to receive a processing result for the at least one split model from the second electronic apparatus 2000, in addition to the time for each split model to be processed by the second electronic apparatus 2000.

In operation 630, the second electronic apparatus 2000 according to an embodiment may transmit, to the first electronic apparatus 1000, a result of processing of the at least one split model, in operation 620.

Similar to the first electronic apparatus 1000, the second electronic apparatus 2000 according to an embodiment may process a split model for which processing is requested from the first electronic apparatus 1000, and then perform an operation of sequentially processing a split model in a next order even though processing request for the split model is not received from the first electronic apparatus 1000.

According to an embodiment, when a processing result of the second electronic apparatus 2000 is not received from the first electronic apparatus 1000 according to a network environment, or when the split model is processed more quickly than the estimated processing time due to a network state or a state of the second electronic apparatus 2000, or due to a state change of the first electronic apparatus 1000, the split model may be processed by the first electronic apparatus 1000 more slowly than the second electronic apparatus 2000. According to an embodiment, a split model which the second electronic apparatus 2000 is not requested to process may be sequentially processed by the second electronic apparatus 2000, so that stable processing of the AI model is possible regardless of the network environment or even when the state of the first electronic apparatus 1000 or the second electronic apparatus 2000 is changed.

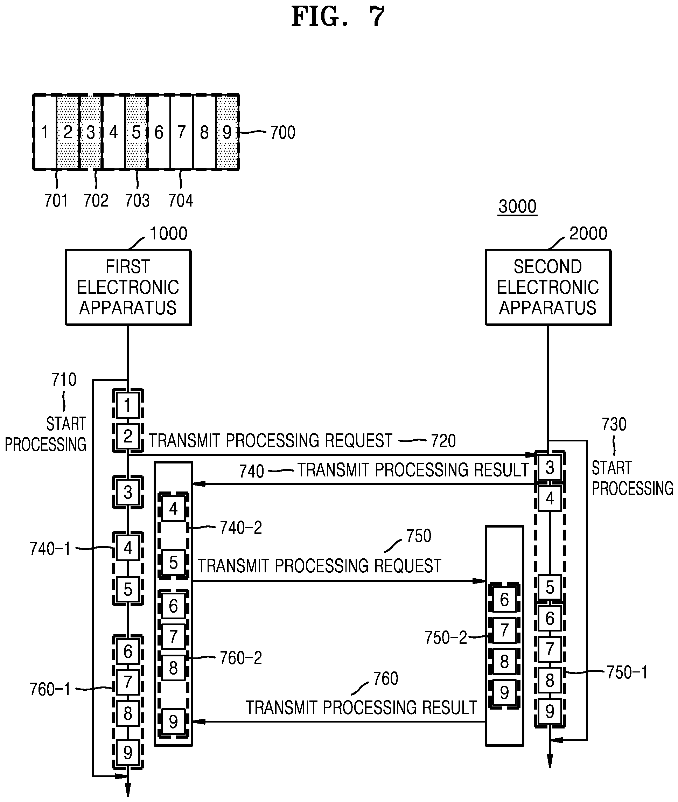

FIG. 7 is a diagram illustrating an example in which distributed processing is performed on the AI model by the first electronic apparatus 1000 and the second electronic apparatus 2000, according to an embodiment of the disclosure.

Referring to FIG. 7, 700 indicates an example in which an AI model 700 for which distributed processing is to be performed by the first electronic apparatus 1000 and the second electronic apparatus 2000 is split. According to an embodiment, layers 2, 3, 5, and 9 from among layers 1 to 9 included in the AI model 700 may be identified as output layers of a split model. According to an embodiment, at least one layer from among the layers included in the AI model 700 may be identified as an output layer of a split model according to various criteria, such as a size of data output from each of the layers, a data rate, and whether the layer in which a fast operation is possible by the second electronic apparatus 2000.

The AI model 700 according to an embodiment may be split into a split model 1 701 including layers 1 and 2, a split model 2 702 including a layer 3, a split model 3 703 including layers 4 and 5, and a split model 4 704 including layers 6, 7, 8, and 9.

Before distributed processing of the AI model is performed in operation 710, the first electronic apparatus 1000 according to an embodiment may identify the second electronic apparatus 2000 to which a request for distributed processing is to be made, and determine whether to request processing to the second electronic apparatus 2000 for each split model.

The determination of whether to request the processing to the second electronic apparatus 2000, according to an embodiment may be performed in advance, before each split model is in order to be processed, as each split model is sequentially processed by the first electronic apparatus 1000. Accordingly, according to an embodiment, as soon as input information for each split model is obtained, a processing request may be transmitted to the second electronic apparatus 2000, so that a quick processing result may be received by the first electronic apparatus 1000. Without being limited thereto, the determination of whether to request the processing to the second electronic apparatus 2000 may be performed by the first electronic apparatus 1000 at various times.

In operation 710, the first electronic apparatus 1000 may start processing of the split model 1 701 including layers 1 and 2. After the split model 1 701 is processed, as the first electronic apparatus 1000 determines the split model 2 702 including layer 3 as a split model which the second electronic apparatus 2000 is requested to process, the first electronic apparatus 100 may transmit the processing request in operation 720.

The processing request transmitted in operation 720 may include information necessary for processing the split model 2 702 by the second electronic apparatus 2000. For example, the processing request may include identification information indicating the split model 2 702, and information regarding a processing result of split model 1 701 as information to be input to the split model 2 702. Without being limited thereto, the processing request may include information of various types that may be used to process the split model 2 702 by the second electronic apparatus 2000.

When the processing request is received from the first electronic apparatus 1000, the second electronic apparatus 2000 according to an embodiment may start processing of the split model 2 702, in operation 730.

In operation 740, when the split model 2 702 is processed, the second electronic apparatus 2000 may transmit, to the first electronic apparatus 1000, information about a processing result of the split model 2 702.

The information about the processing result of the split model 2 702 transmitted in operation 740 may include identification information indicating the split model 2 702, output information of the split model 2 702, and information about a time for the split model 2 702 to be processed by the second electronic apparatus 2000.

The first electronic apparatus 1000 according to an embodiment may determine an operation speed of the second electronic apparatus 2000 based on the information about the time, and update the performance information of the second electronic apparatus 2000. Accordingly, the first electronic apparatus 1000 according to an embodiment may determine whether to transmit, to the second electronic apparatus 2000, a processing request for a split model not yet processed, based on the updated performance information of the second electronic apparatus 2000.

Without being limited thereto, the information about the processing result of the split model 2 702 may include information of various types that may be used to perform distributed processing on the AI model by the first electronic apparatus 1000.

The first electronic apparatus 1000 according to an embodiment may, apart from the operation of transmitting the processing request for the split model 2, sequentially process the split models 1 to 4 701, 702, 703, and 704 included in the AI mode, in operation 720. When a processing result for a split model for which processing is not yet completed is received from the second electronic apparatus 2000 while the plurality of split models are sequentially processed, the first electronic apparatus 1000 according to an embodiment may perform sequential processing from a split model for which the processing result is received.

For example, when output information of the split model 2 is first received from the second electronic apparatus 2000 before output information of the split model 2 702 is obtained by the first electronic apparatus 1000, the first electronic apparatus 1000 may process the split model 3 703 including layers 4 and 5 based on the output information of the split model 2 702 received first.

Accordingly, according to an embodiment, when the AI model is processed without using the second electronic apparatus 2000, depending on the operation processing capability of the second electronic apparatus 2000, a time point 740-2 at which processing of the split model 3 703 starts based on the processing result of the split model 2 702 by the second electronic apparatus 2000 may be earlier than a time point 740-1 at which processing of the split model 3 703 starts.

In FIG. 7, split models shown on the left with respect to the first electronic apparatus 1000 are shown according to a time point at which each of the split models is processed when the second electronic apparatus 2000 is not in use, and split models shown on the right are shown according to a time point at which each of the split models is processed based on a result of processing of the split model 2 702 by the second electronic apparatus 2000. According to an embodiment, as shown on the right, each of the split models may be processed based on the processing result of the split model 2 702 by the second electronic apparatus 2000, and thus, distributed processing may be performed on the AI model in an accelerated manner.

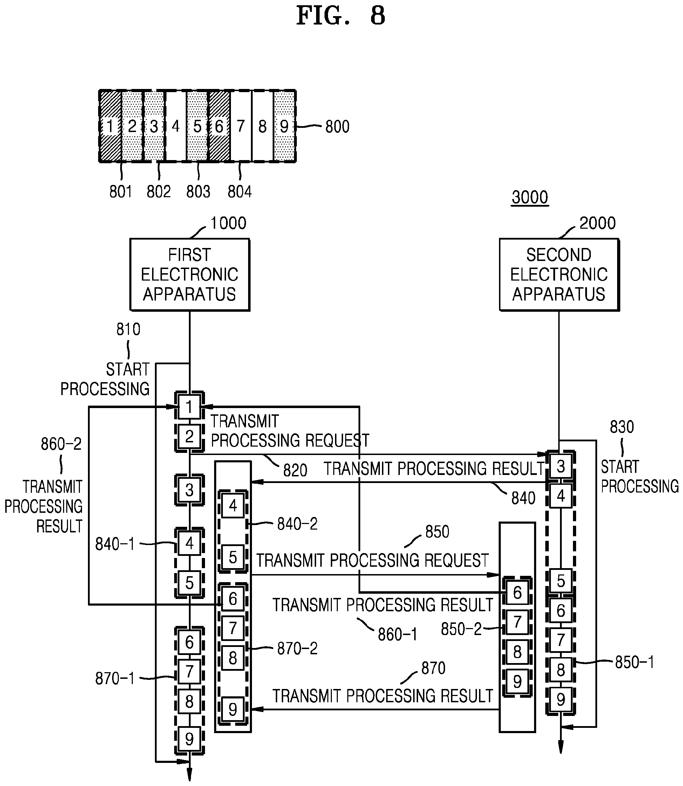

Similar to FIG. 7, in FIGS. 8 to 12 described below, split models processed in each of the electronic apparatuses are shown according to a time point at which each of the split models is processed.

As it is determined to request processing of the split model 4 704 including layers 6, 7, 8, and 9 to the second electronic apparatus 2000, the first electronic apparatus 1000 according to an embodiment may transmit a processing request for the split model 4 704 to the second electronic apparatus 2000, in operation 750. The processing request for the split model 4 704 according to an embodiment may be transmitted based on the output information of the split model 3 703, after the split model 3 703 is processed.

Similar to the first electronic apparatus 1000, the second electronic apparatus 2000 according to an embodiment may process the split model 2 702 and then sequentially process the split model 3 703 and the split model 4 704. As a processing request for at least one split model is received from the first electronic apparatus 1000, the second electronic apparatus 2000 according to an embodiment may sequentially process split models included in the AI model from the at least one split model. In addition, when a processing request for a split model for which processing is not yet started is received from the first electronic apparatus 1000 while the split models are sequentially processed by the second electronic apparatus 2000, the second electronic apparatus 2000 may perform sequentially processing from the split model for which the processing is requested, based on the processing request.

For example, when a processing request for the split model 4 704 for which processing is not yet started is first received from the first electronic apparatus 1000 before output information of the split model 3 703 is obtained by the second electronic apparatus 2000, the second electronic apparatus 2000 may process the split model 4 704 based on input information of the split model 4 704 included in the processing request.

Accordingly, according to an embodiment, when a processing request from the first electronic apparatus 1000 is not used by the second electronic apparatus 2000 according to the operation processing capability of the first electronic apparatus 1000, a time point 750-2 at which the split model 4 704 is processed based on the processing request received from the first electronic apparatus 1000 may be earlier than a time point 750-1 at which the processing of the split model 4 704 starts. On the other hand, when the split model 4 704 is already processed by the second electronic apparatus 2000 before the processing request for the split model 4 704 is received from the first electronic apparatus 1000 according to the operation processing capability of the second electronic apparatus 2000, the second electronic apparatus 2000 may not use the processing request received from the first electronic apparatus 1000 and discard the processing request.

In FIG. 7, split models shown on the right with respect to the second electronic apparatus 2000 are shown according to a time point at which each of the split models is processed when the input information of the split model included in the processing request received from the first electronic apparatus 1000 is not used, and split models shown on the left are shown according to a time point at which each of the split models is processed based on the processing request received from the first electronic apparatus 1000. According to an embodiment, because each of the split models may be processed based on the processing request received from the first electronic apparatus 1000, as shown on the left, distributed processing of the AI model may be accelerated.

Similar to FIG. 7, in FIGS. 8 to 12 described below, split models processed in each of the electronic apparatuses are shown according to a time point at which each of the split models is processed.

The second electronic apparatus 2000 according to an embodiment may process the split model 4 704, and in operation 760, transmit a processing result of the split model 4 704 to the first electronic apparatus 1000.

According to an embodiment, when the output information of the split model 4 704 is first received from the second electronic apparatus 2000 before the processing result of the split model 4 704 is obtained by the first electronic apparatus 1000, the first electronic apparatus 1000 may obtain the output information of the split model 4 704 received first, as output information of the AI model.

Accordingly, according to an embodiment, the split model 4 704 is processed by the second electronic apparatus 2000 earlier than time points 760-1 and 760-2 at which processing of the split model 704 is completed without using the second electronic apparatus 2000, and accordingly, the output information of the split model 4 704 may be obtained more quickly by the first electronic apparatus 1000.

FIG. 8 is a diagram illustrating an example in which distributed processing is performed on the AI model by the first electronic apparatus 1000 and the second electronic apparatus 2000 by considering feedback, according to an embodiment.

Referring to FIG. 8, 800 shows an example in which an AI model 800 for which distributed processing is performed by the first electronic apparatus 1000 and the second electronic apparatus 2000 is split. According to an embodiment, layers 2, 3, 5, and 9 from among layers 1 to 9 included in the AI model 800 may be identified as output layers of a split model.

Unlike in the AI model 700 of FIG. 7, in the AI model 800 of FIG. 8, layers 1 and 6 related to an operation in which output information of a layer is input as feedback information may be additionally identified.

Layer 1 according to an embodiment may be identified in advance as a layer that receives output information of layer 6 as feedback information. For example, when a plurality of pieces of input information may be sequentially input to the AI model 800 and processed, the output information of layer 6 obtained according to processing of current input information may be input to layer 1 as feedback information when input information in a next order is processed by layer 1.

The first electronic apparatus 1000 and the second electronic apparatus 2000 according to an embodiment may identify in advance layers 1 and 6 related to feedback, and perform an operation such that the output information of layer 6 may be input to layer 1 as feedback information.

The AI model 800 according to an embodiment may be split into a split model 1 including layers 1 and 2, a split model 2 including a layer 3, a split model 3 including layers 4 and 5, and a split model 4 including layers 6, 7, 8, and 9.

The first electronic apparatus 1000 according to an embodiment may identify the second electronic apparatus 2000 to which a request for distributed processing is to be made, before performing distributed processing on the AI model in operation 810, and determine whether to request processing to the second electronic apparatus 2000 for each split model.

In operation 810, the first electronic apparatus 1000 may start processing of the split model 1 801 including layers 1 and 2. The first electronic apparatus 1000 processes the split model 1 801, and then may determine the split model 2 802 including layer 3 as a split model which the second electronic apparatus 2000 is requested to process, and transmit a processing request, in operation 820.

As the processing request is received from the first electronic apparatus 1000, the second electronic apparatus 2000 according to an embodiment may start processing of the split model 2 802, in operation 830.

In operation 840, the second electronic apparatus 2000 may transmit, to the first electronic apparatus 1000, a processing result of the split model 2 802 obtained by processing the split model 2 802.

According to an embodiment, depending on the operation processing capability of the second electronic apparatus 2000, a time point 840-2 at which a split model 3 803 is processed based on the processing result received from the second electronic apparatus 2000 may be earlier than a time point 840-1 at which the split model 3 803 is processed without using the second electronic apparatus 2000.

As it is determined to request processing of a split model 4 804 including layers 6, 7, 8, and 9 to the second electronic apparatus 2000, the first electronic apparatus 1000 according to an embodiment may transmit a processing request for the split model 4 804 to the second electronic apparatus 2000, in operation 850.

According to an embodiment, depending on the operation processing capability of the first electronic apparatus 1000, a time point 850-2 at which the split model 4 804 is processed according to the processing request of the first electronic apparatus 1000 may be earlier than a time point 850-1 at which processing of the split model 4 804 by the second electronic apparatus 2000 starts without using the processing request of the first electronic apparatus 1000. Accordingly, the second electronic apparatus 2000 according to an embodiment may start processing of the split model 4 804 from an earlier time point according to the processing request of the first electronic apparatus 1000, so that distributed processing of the AI model may be accelerated.

In addition, as output information of layer 6 related to feedback is obtained during an operation of processing the split model 4 804, the second electronic apparatus 2000 according to an embodiment may transmit the output information of layer 6 to the first electronic apparatus 1000, in operation 860-1. When the output information of layer 6 is first obtained by the first electronic apparatus 1000, the first electronic apparatus 1000 according to an embodiment may transfer the output information of layer 6 as input information of layer 1, in operation 860-2. On the other hand, when the output information of layer 6 is first received from the second electronic apparatus 2000, the output information of the layer 6 may be transferred as the input information of layer 1, in operation 870-1. The first electronic apparatus 1000 according to an embodiment may sequentially the AI model for input data in a next order from layer 1, based on output information first received from among output information respectively obtained in operations 860-1 and 860-2.

The second electronic apparatus 2000 according to an embodiment may process the split model 4 804, and transmit output information of the split model 4 804 to the first electronic apparatus 1000, in operation 870.

According to an embodiment, depending on the operation processing capability of the second electronic apparatus 2000, the processing result of the split model 4 804 based on the processing result received from the second electronic apparatus 2000 may be obtained earlier than time points 870-1 and 870-2 at which the processing results of the split model 4 are obtained without using the second electronic apparatus 2000. Accordingly, according to an embodiment, as the processing result received from the second electronic apparatus 2000 is received by the first electronic apparatus 1000, the distributed processing of the AI model may be accelerated.

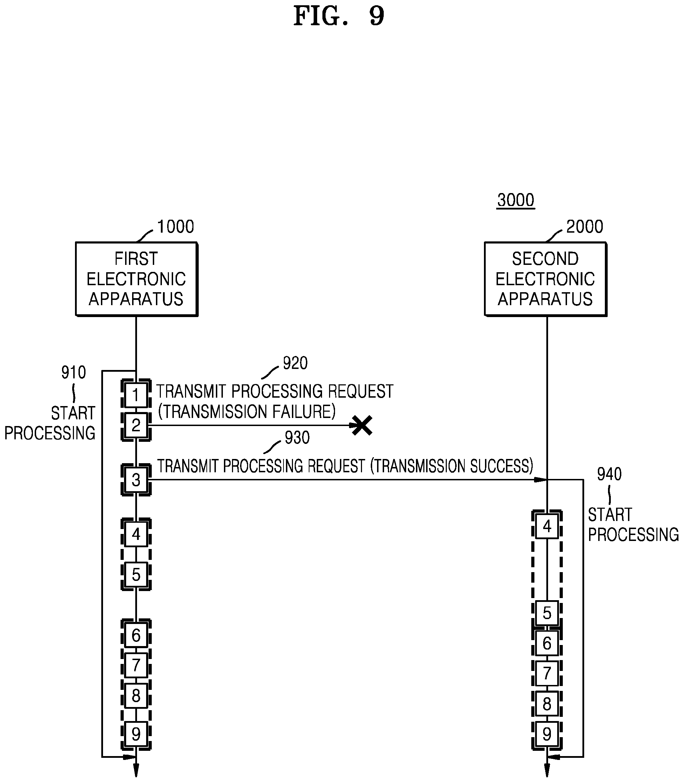

FIG. 9 is a diagram illustrating an example in which data transmission fails when distributed processing is performed on the AI model by the first electronic apparatus 1000 and the second electronic apparatus 2000, according to an embodiment.

Referring to FIG. 9, similar to the AI model 700 in FIG. 7, the distributed processing of the AI model 700 may be performed based on a plurality of split models obtained by split.

In operation 910, the first electronic apparatus 1000 may start processing of the split model 1 701 including layers 1 and 2. The first electronic apparatus 1000 may process the split model 1 701, and then determine the split model 2 702 as a split model which the second electronic apparatus 2000 is requested to process, to transmit a processing request, in operation 920.

However, when transmission of the processing request fails in operation 920, due to a network problem between the first electronic apparatus 1000 and the second electronic apparatus 2000, the second electronic apparatus 2000 may not receive the processing request of the first electronic apparatus, and accordingly, processing of the split model 2 702 may not be performed by the second electronic apparatus 2000.

According to an embodiment, the first electronic apparatus 1000 may, apart from an operation of transmitting the processing request for the split model 2 to the second electronic apparatus 2000, process the split model 1 701 and then sequentially process the split model 2 702. When output information of the split model 2 702 is not received from the second electronic apparatus 2000 until processing of the split model 2 702 is completed, the first electronic apparatus 1000 according to an embodiment may sequentially process the split model 3 703 after the processing of the split model 2 is completed. In addition, when the split model 3 703 is determined as a split model which the second electronic apparatus 2000 is requested to process, the first electronic apparatus 1000 may, apart from an operation of processing the split model 3 703 by the first electronic apparatus 1000, transmit a processing request, in operation 930.

When the processing request transmitted in operation 930 is received, the second electronic apparatus 2000 according to an embodiment may perform processing on the split model 3 703 including layers 4 and 5, in operation 940. When the processing of the split model 3 703 is completed, the second electronic apparatus 2000 according to an embodiment may transmit output information of the split model 3 to the first electronic apparatus 1000.

In preparation for a case in which the transmission of the processing request through a network fails or a time at which the split model is processed by the second electronic apparatus 2000 is significantly delayed compared to a time estimated by the first electronic apparatus 1000, the first electronic apparatus 1000 according to an embodiment may sequentially process a plurality of split models of the AI model including the split model which the second electronic apparatus 2000 is requested to process. Accordingly, even when a processing result of the split model is not received from the second electronic apparatus 2000 or is received late, the first electronic apparatus 1000 may quickly process the AI model based on a processing result of a split model previously processed by the first electronic apparatus 1000.

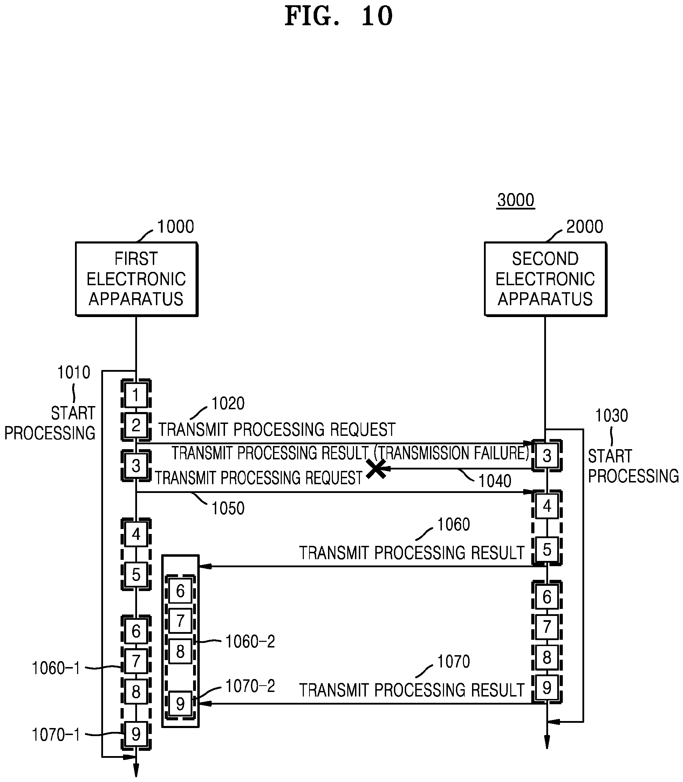

FIG. 10 is a diagram illustrating an example in which data transmission fails when distributed processing is performed on the AI model by the first electronic apparatus 1000 and the second electronic apparatus 2000, according to an embodiment.

Referring to FIG. 10, similar to the AI model 700 in FIG. 7, the distributed processing of the AI model 700 may be performed based on a plurality of split models obtained by split.

In operation 1010, the first electronic apparatus 1000 may start processing of the split model 1 701 including layers 1 and 2. The first electronic apparatus 1000 may process the split model 1 701, and then, when the split model 2 702 is determined as a split model which the second electronic apparatus 2000 is requested to process, transmit a processing request, in operation 1020.

In operation 1030, when the processing result transmitted in operation 1020 is received, the second electronic apparatus 2000 may perform sequential processing from the split model 2 702. In operation 1040, when the processing of the split model 2 702 is completed, the second electronic apparatus 2000 may transmit a processing result of the split model 2 702 to the first electronic apparatus 1000.

However, when transmission of the processing result of the split model 2 702 fails in operation 1040, due to a network problem between the first electronic apparatus 1000 and the second electronic apparatus 2000, the first electronic apparatus 1000 may sequentially process the split model 3 703 based on a processing result of the split model 2 702 processed by the first electronic apparatus 1000, without the output information of the split model 2 702 processed by the second electronic apparatus 2000.

According to an embodiment, the first electronic apparatus 1000 may, apart from the processing request transmitted in operation 1020, sequentially perform processing on the split model 2 702. Accordingly, even when the transmission in operation 1040 fails and the first electronic apparatus 1000 does not receive the processing result of the split model 2 702 from the second electronic apparatus 2000, the split model 3 703 may be sequentially processed based on the processing result of the split model 2 702 processed by the first electronic apparatus 1000.

In operation 1050, the first electronic apparatus 1000 may, apart from an operation of sequentially processing the split model 3 703, transmit a processing request for the split model 3 703 to the second electronic apparatus 2000 based on a processing time estimated for the split model 3 703 based on the performance information of the second electronic apparatus 2000.

In addition, in operation 1060, the second electronic apparatus 2000 may transmit a processing result of the split model 3 703 to the first electronic apparatus 1000. According to an embodiment, the split model 4 704 may be processed based on the processing result of the split model 3 703 received from the second electronic apparatus 2000 from a time point 1060-2, which is earlier than a time point 1060-1 at which processing of the split model 4 704 starts by the first electronic apparatus 1000 without using the second electronic apparatus 2000.

The second electronic apparatus 2000 according to an embodiment may also sequentially process the split model 4 704 for which a processing request is not received from the first electronic apparatus 1000, after the split model 3 703 is processed. In preparation for a case in which the transmission of operation 1060 according to an embodiment fails due to a network state or the second electronic apparatus 2000 may process the split model 4 704 more quickly than the first electronic apparatus 1000, the second electronic apparatus 2000 may also sequentially process the split model 4 704, which is a split model for which the processing request is not received from the first electronic apparatus 1000, upon completion of processing of the split model 3 703.

The second electronic apparatus 2000 according to an embodiment may transmit output information of the split model 4 704 to the first electronic apparatus 1000, in operation 1070.

Accordingly, according to an embodiment, the output information of the split model 4 704 may be more quickly obtained by the first electronic apparatus 1000 based on the processing result of the split model 4 704 processed by the second electronic apparatus 2000 than time points 1070-1 and 1070-2 at which processing of the split model 4 704 is completed by the first electronic apparatus 1000 without using the second electronic apparatus 2000.

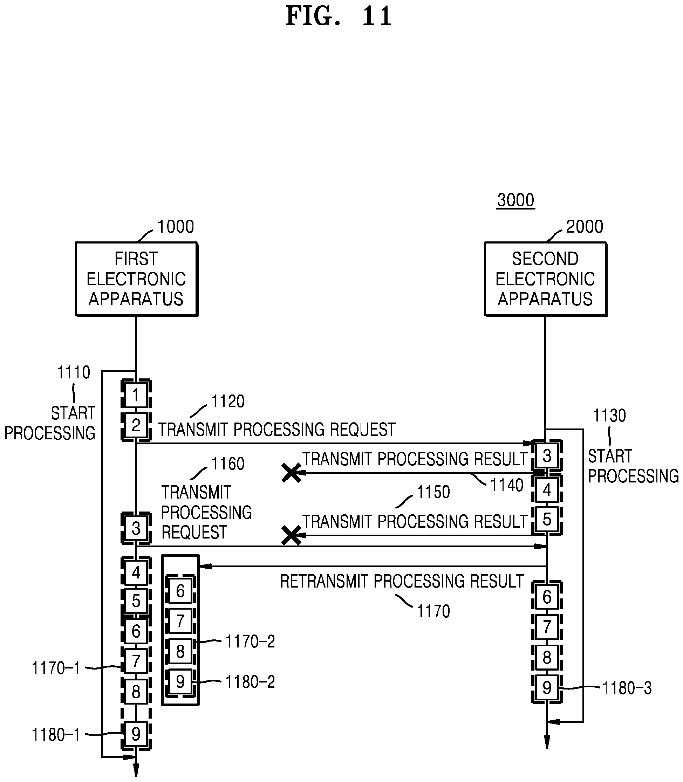

FIG. 11 is a diagram illustrating an example in which data transmission fails when distributed processing is performed on the AI model by the first electronic apparatus 1000 and the second electronic apparatus 2000, according to an embodiment.

Referring to FIG. 11, similar to the AI model 700 in FIG. 7, distributed processing of the AI model 700 may be performed based on a plurality of split models obtained by split

In operation 1010, the first electronic apparatus 1000 may start processing of the split model 1 701 including layers 1 and 2. The first electronic apparatus 1000 may process the split model 1 701, and then, when the split model 2 702 including layer 3 is determined as a split model which the second electronic apparatus 2000 is requested to process, transmit a processing request, in operation 1120.

In operation 1130, when the processing request transmitted in operation 1120 is received, the second electronic apparatus 2000 may perform sequential processing from the split model 2 702. In operation 1140, when the processing of the split model 2 702 is completed, the second electronic apparatus 2000 may transmit output information of the split model 2 702 to the first electronic apparatus 1000.

In addition, the second electronic apparatus 2000 may also sequentially process the split model 3 703, for which the processing request is not received from the first electronic apparatus 1000. When the processing request for the split model 3 703 is received by the second electronic apparatus 2000 before processing of the split model 2 702 is not completed, the second electronic apparatus 2000 may first obtain input information of the split model 3 703 from the received processing request, before the processing of the split model 2 is completed. However, when the processing request is not received until the processing of the split model 2 702 is completed, the second electronic apparatus 2000 may process the split model 3 703 after the processing of the split model 2 702 is completed.

When the processing of the split model 3 703 is completed, the second electronic apparatus 2000 according to an embodiment may transmit output information of the split model 3 703 to the first electronic apparatus 1000, in operation 1150.

However, when transmission of the output information of the split model 3 703 fails in operation 1150, due to a network problem between the first electronic apparatus 1000 and the second electronic apparatus 2000, the first electronic apparatus 1000 may not receive the output information of the split model 3 703 processed by the second electronic apparatus 2000, and because the first electronic apparatus 1000 complete processing of the split model 2 702 later than the second electronic apparatus 2000, may transmit a processing request for the split model 3 703 to the second electronic apparatus 2000, in operation 1160.

When the processing request for the split model 3 is received from the first electronic apparatus 1000 even though the output information of the split model 3 703 is provided in operation 1150, the second electronic apparatus 2000 according to an embodiment may determine that the output information of the split model 3 703 is not provided to the first electronic apparatus 1000. Accordingly, in operation 1170, the second electronic apparatus 2000 may retransmit the output information of the split model 3 703 to the first electronic apparatus 1000.

According to an embodiment, when the output information of the split model 3 703 is retransmitted to the first electronic apparatus 1000 in operation 1170, the split model 4 704 may be processed by the first electronic apparatus 1000 from a time point 1170, which is earlier than a time point 1170-1 at which the first electronic apparatus 1000 starts processing the split model 4 704 without using the second electronic apparatus 2000.

In addition, according to an embodiment, the first electronic apparatus 1000 may complete processing of the split model 4 704 based on the output information of the split model 3 703 transmitted in operation 1170 earlier than a time point 1180-1 at which processing of the split model 4 704 by the first electronic apparatus 1000 is completed without using the second electronic apparatus 2000.

At a time point 1180-3, the second electronic apparatus 2000 according to an embodiment may transmit, to the first electronic apparatus 1000, output information of the split model 4 704, which is a result of processing of the split model 4 704. However, when a time point at which the first electronic apparatus 1000 receives the output information of the split model 4 704 is later than a time point 1180-2 at which the first electronic apparatus 1000 completes processing of the split model 4 704, the first electronic apparatus 1000 may discard the output information of the split model 4 704 received from the second electronic apparatus 2000 without using it.

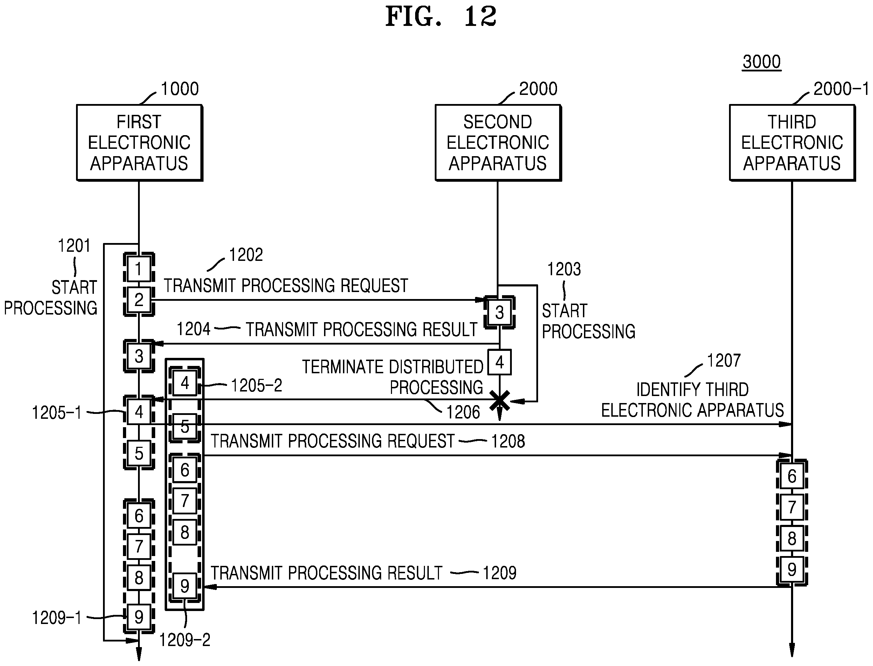

FIG. 12 is a diagram illustrating an example in which distributed processing is performed on the AI model by the first electronic apparatus 1000, the second electronic apparatus 2000, and a third electronic apparatus 2000-1, according to an embodiment.

Referring to FIG. 12, similar to the AI model 700 of FIG. 7, distributed processing may be performed on the AI model 700 based on a plurality of split models obtained by split.

In operation 1201, the first electronic apparatus 1000 may start processing of the split model 1 701 including layers 1 and 2. The first electronic apparatus 1000 may process the split model 1 701, and then, when the split model 2 702 including layer 3 is determined as a split model which the second electronic apparatus 2000 is requested to process, transmit a processing request, in operation 1202.

In operation 1203, when the processing request transmitted in operation 1202 is received, the second electronic apparatus 2000 may perform sequential processing from the split model 2 702. In operation 1204, when the processing of the split model 2 702 is completed, the second electronic apparatus 2000 may transmit output information of the split model 2 702 to the first electronic apparatus 1000.

According to an embodiment, when output information for the split model 2 is first received from the second electronic apparatus 2000 before output information of the split model 2 702 is obtained by the first electronic apparatus 1000, the first electronic apparatus 1000 may process the split model 3 703 including the layers 4 and 5 based on the first output information of the split model 2 702 received first, in operation 1205.

Accordingly, according to an embodiment, a time point 1205-2 at which processing of the split model 3 703 starts based on a result of processing of the split model 2 702 by the second electronic apparatus 2000 may be earlier than a time point 1205-1 at which processing of the split model 3 703 starts without using the second electronic apparatus 2000.

However, in operation 1206, when information indicating that distributed processing of the AI model 700, transmitted from the second electronic apparatus 2000 is received by the first electronic apparatus 1000, the first electronic apparatus 1000 may identify the third electronic apparatus 2000-1 for performing distributed processing on the AI model 700, in operation 1207. The second electronic apparatus 2000 according to an embodiment may transmit, to the first electronic apparatus 1000, the information indicating that the distributed processing of the AI model 700 is terminated, based on a user input received by the second electronic apparatus 2000. Alternatively, when a state of the second electronic apparatus 2000 is changed not to be suitable for performing distributed processing on the AI model 700, the information indicating that the distributed processing of the AI model 700 is terminated may be transmitted to the first electronic apparatus 1000. Without being limited thereto, in various cases, the information indicating that the distributed processing of the AI model 700 may be transmitted from the second electronic apparatus 2000 to the first electronic apparatus 1000.

When it is determined to request processing of the split model 4 704 to the third electronic apparatus 2000-1 based on the identified performance information of the third electronic apparatus 2000-1, the first electronic apparatus 1000 according to an embodiment may transmit a processing request for the split model 4 704 to the third electronic apparatus 2000-1, in operation 1208. The processing request for the split model 4 704 according to an embodiment may include the input information of the split model 4 704 obtained based on the processing result of the split model 3 703.

The third electronic apparatus 2000-1 according to an embodiment may be identified in advance by the first electronic apparatus 1000, before the first electronic apparatus 1000 receives the information indicating that the distributed processing of the AI model 700 is terminated, transmitted from the second electronic apparatus 2000, in operation 1206. In preparation for a case in which a distributed processing by the second electronic apparatus 2000 may be terminated, the first electronic apparatus 1000 according to an embodiment may identify the third electronic apparatus 2000-1 in advance, so that distributed processing by the third electronic apparatus 2000-1 starts more quickly when the distributed processing by the second electronic apparatus 2000 is terminated. The third electronic apparatus 2000-1 according to an embodiment may be identified together with the second electronic apparatus 2000 when the second electronic apparatus 2000 is identified, but may be identified while distributed processing is performed by the second electronic apparatus 2000 after the second electronic apparatus 2000 is identified. Without being limited thereto, the third electronic apparatus 2000-1 may be identified by the first electronic apparatus 1000 at various time points.

The first electronic apparatus 1000 according to an embodiment may split the AI model 700 into a plurality of split models and determine whether to transfer, to the third electronic apparatus 2000-1, a processing request for at least one split model from among the plurality of split models based on the performance information of the identified third electronic apparatus 2000-1.

The split of the AI model 700 according to an embodiment may be performed based on the performance information of the third electronic apparatus 2000-1, unlike a split model used in the distributed processing operation by the second electronic apparatus 2000. According to an embodiment, the AI model 700 may be split into a plurality of split models based on the performance information of the third electronic apparatus 2000-1, so as to be suitable for the distributed processing of the AI model 700 by the third electronic apparatus 2000-1. Without being limited to the performance information of the third electronic apparatus 2000-1 described above, the AI model 700 may be split into a plurality of split models based on various information. The split of the AI model 700 based on the performance information of the third electronic apparatus 2000-1 according to an embodiment may be performed together when the AI model 700 is split based on the performance information of the second electronic apparatus 2000, but is not limited thereto, and may be performed while the distributed processing is performed by the second electronic apparatus 2000. Without being limited thereto, the split of the AI model 700 based on the performance information of the third electronic apparatus 2000-1 may be performed by the first electronic apparatus 1000 at various time points.

Determination of whether to transfer a processing request for each split model to the third electronic apparatus 2000-1 according to an embodiment may be performed when the first electronic apparatus 1000 receives the information indicating that the distributed processing of the AI model 700 is terminated, transmitted from the second electronic apparatus 2000 in operation 1206. However, the disclosure is not limited thereto, and the determination of whether to transfer the processing request for each split model to the third electronic apparatus 2000-1 may be performed while distributed processing is performed by the second electronic apparatus 2000 after split of the AI model 700 based on the performance of the third electronic apparatus 2000-1 is performed.

In addition, according to an embodiment, the determination of whether to transfer the processing request for each split model to the third electronic apparatus 2000-1 may be performed on a split model including a layer not yet processed by the first electronic apparatus 1000 or a layer for which a processing result is not yet obtained from the first electronic apparatus 1000, based on a time point at which the determination is performed. Without being limited thereto, the determination may be performed on a split model identified based on various time points.

The third electronic apparatus 2000-1 according to an embodiment may process the split model 4 704 so that the output information of the split model 4 704 may be transmitted to the first electronic apparatus 1000 in operation 1209.

According to an embodiment, when the output information of the split model 4 704 is first received from the third electronic apparatus 2000-1 before the output information of the split model 4 704 is obtained by the first electronic apparatus 1000, the first electronic apparatus 1000 may obtain the first received output information of the split model 4 704 as output information of the AI model.

Accordingly, according to an embodiment, the first electronic apparatus 1000 may more quickly obtain the output information of the split model 4 704 at a time point 1209-3, which is earlier than time points 1209-1 and 1209-2 at which the processing of the split model 4 704 is completed by the first electronic apparatus 1000 without using the third electronic apparatus 2000-1.

According to an embodiment, limitation in processing performance according to hardware of an electronic apparatus may be minimized while maintaining advantages of the on-device AI technology in terms of user privacy and data processing speed.

A machine-readable storage medium may be provided in a form of a non-transitory storage medium. Here, the "non-transitory storage medium" only denotes a tangible device and does not contain a signal (for example, electromagnetic waves). This term does not distinguish a case where data is stored in the storage medium semi-permanently and a case where the data is stored in the storage medium temporarily. For example, the "non-transitory storage medium" may include a buffer where data is temporarily stored.

According to an embodiment of the discdlosure, a method according to various embodiments disclosed in the present specification may be provided by being included in a computer program product. The computer program products are products that can be traded between sellers and buyers. The computer program product may be distributed in a form of machine-readable storage medium (for example, a compact disc read-only memory (CD-ROM)), or distributed (for example, downloaded or uploaded) through an application store (for example, Play Store™) or directly or online between two user devices (for example, smartphones). In the case of online distribution, at least part of the computer program product (for example, a downloadable application) may be at least temporarily generated or temporarily stored in a machine-readable storage medium, such as a server of a manufacturer, a server of an application store, or a memory of a relay server.

In the specification, the term "module" may refer to a hardware component, such as a processor or a circuit, and/or a software component executed by the hardware component, such as the processor.

The above description of the disclosure is provided for illustration, and it will be understood by one of ordinary skill in the art that various changes in form and details may be readily made therein without departing from essential features and the scope of the disclosure as defined by the following claims. Accordingly, the embodiments described above are examples in all aspects and are not limited. For example, each element described as a single type may be implemented in a distributed manner, and similarly, elements described as distributed may be implemented in a combined form.

The scope of the disclosure is defined by the appended claims rather than the detailed description, and all changes or modifications within the scope of the appended claims and their equivalents will be construed as being included in the scope of the disclosure.

## Claims

1. A method of performing, by a first electronic apparatus, distributed processing on an artificial intelligence model, the method comprising:

   obtaining performance information of a second electronic apparatus to perform distributed processing on the artificial intelligence model;
   obtaining a plurality of split models by splitting the artificial intelligence model;
   estimating, based on the performance information, a processing time for each of the plurality of split models to be processed by the second electronic device;
   determining, based on the estimated processing time, at least one split model which the second electronic apparatus is requested to process, from among the plurality of split models; and
   performing distributed processing on the artificial intelligence model by requesting processing of the determined at least one split model to the second electronic apparatus.

2. The method of claim 1, wherein the plurality of split models are obtained by splitting the artificial intelligence model, based on the performance information.

3. The method of claim 1, wherein the obtaining of the plurality of split models comprises:

   identifying at least one layer from among a plurality of layers included in the artificial intelligence models, as a layer for split; and
   obtaining the plurality of split models each comprising the identified layer as an output layer.

4. The method of claim 1, wherein the first electronic apparatus sequentially processes the plurality of split models including the at least one split model which the second electronic apparatus is requested to process.

5. The method of claim 4, wherein, when a processing result of a split model for which processing is not yet completed is received from the second electronic apparatus while the plurality of split models are processed by the first electronic apparatus, processing is sequentially performed from the split model for which the processing result is received from among the plurality of split models, based on the received processing result.

6. A method of performing, by a second electronic apparatus, distributed processing on an artificial intelligence model, the method comprising:

   when at least one split model which the second electronic apparatus is requested to process is determined based on a processing time of the second electronic apparatus for a plurality of split models obtained by splitting the artificial intelligence model, the processing time being estimated based on performance information of the second electronic apparatus, receiving a processing request for the at least one split model from a first electronic apparatus;

   processing the at least one split model; and

   transmitting a result of the processing of the at least one split model to the first electronic apparatus, such that distributed processing is performed on the artificial intelligence model.

7. The method of claim 6, wherein, when the processing request is received, the second electronic apparatus sequentially processes the split models of the artificial intelligence from the at least one split model, the split models comprising a split model for which a processing request is not received from the first electronic apparatus.

8. The method of claim 7, wherein, when a processing request for a split model for which processing is not yet started is received from the first electronic apparatus while the split models are sequentially processed by the second electronic apparatus, processing is sequentially performed from the split model for which the processing request is received, based on the processing request.

9. The method of claim 6, wherein, when a processing request for a split model for which a processing result is most recently provided to the first electronic apparatus or a split model processed prior to the split model is received from the first electronic apparatus, the processing result of the split model most recently transmitted to the first electronic apparatus is retransmitted to the first electronic apparatus.

10. A system configured to perform distributed processing on an artificial intelligence model by using a plurality of electronic apparatuses, the system comprising:

    a first electronic apparatus configured to obtain performance information of a second electronic apparatus to perform distributed processing on the artificial intelligence model, obtain a plurality of split models by splitting the artificial intelligence model, estimate, based on the performance information, a processing time for each of the plurality of split models to be processed by the second electronic apparatus, determine, based on the estimated processing time, at least one split model which the second electronic apparatus is requested to process from among the plurality of split models, and request processing of the determined at least one split model to the second electronic apparatus, such that distributed processing is performed on the artificial intelligence model; and

    the second electronic apparatus configured to, when at least one split model which the second electronic apparatus is requested to process is determined based on a processing time of the second electronic apparatus for the plurality of split models obtained by splitting the artificial intelligence model, the processing time being estimated based on the performance information of the second electronic apparatus, receive a processing request for the at least one split model from the first electronic apparatus, processes the at least one split model, and transmitting a result of the processing of the at least one split model to the first electronic apparatus, such that distributed processing is performed on the artificial intelligence model.

11. A first electronic apparatus configured to perform distributed processing on an artificial intelligence model, the first electronic apparatus comprising:

    a memory storing the artificial intelligence model;

    at least one processor configured to: obtain performance information of a second electronic apparatus to perform a distributed processing on the artificial intelligence model,

    obtain a plurality of split models by splitting the artificial intelligence model, estimate, based on the performance information, a processing time for each of the plurality of split models to be processed by the second electronic device; and

    determine, based on the estimated processing time, at least one split model which the second electronic apparatus is requested to process from among the plurality of split models; and

    a communicator configured to request processing of the at least one determined split model to the second electronic apparatus, such that distributed processing is performed on the artificial intelligence model.

12. The first electronic apparatus of claim 11, wherein the first electronic apparatus sequentially processes the plurality of split models, and,
distributed processing is performed on the artificial intelligence model based on a processing result first obtained by the first electronic apparatus from among a result obtained by sequentially processing the plurality of split models by the first electronic apparatus and a result obtained by processing the at least one split model by the second electronic apparatus.

13. A second electronic apparatus configured to perform distributed processing on an artificial intelligence model, the second electronic apparatus comprising:

a communicator configured to receive, from a first electronic apparatus, at least one split model from among a plurality of split models obtained by splitting the artificial intelligence model, based on a processing time of the second electronic apparatus for the plurality of split models, the processing time being estimated based on performance information of the second electronic apparatus;
a memory storing the at least one split model; and
at least one processor configured to process the at least one split model, and transmit the communicator to transmit, to the first electronic apparatus, a result of the processing of the at least one split model, such that distributed processing is performed on the artificial intelligence model.

14. The second electronic apparatus of claim 13, wherein, when a processing request for a split model for which a processing result is most recently provided to the first electronic apparatus or a split model processed prior to the split model is received from the first electronic apparatus, the second electronic apparatus retransmits, to the first electronic apparatus, the processing result of the split model most recently transmitted to the first electronic apparatus.

15. A computer-readable recording medium having recorded thereon a program for executing the method of any one of claims 1 to 5.

# FIG. 1

```
                                              3000
        ┌──────────────┐                  ┌──────────────┐
        │ 1000         │                  │ 2000         │
        │    FIRST     │                  │   SECOND     │
        │  ELECTRONIC  │                  │  ELECTRONIC  │
        │  APPARATUS   │                  │  APPARATUS   │
        └──────────────┘                  └──────────────┘
```

┌─────────────────────────────────────────┐ 110
│ OBTAIN ARTIFICIAL INTELLIGENCE (AI)       │
│ MODEL THAT MAY BE SPLIT                    │
└─────────────────────────────────────────┘

┌─────────────────────────────────────────┐ 115
│ IDENTIFY SECOND ELECTRONIC APPARATUS      │
└─────────────────────────────────────────┘

RECEIVE PERFORMANCE INFORMATION
OF SECOND ELECTRONIC APPARATUS
◄─────────────────────────────────── 120

┌─────────────────────────────────────────┐ 125
│ SPLIT AI MODEL BASED ON PERFORMANCE       │
│ INFORMATION OF SECOND                      │
│ ELECTRONIC APPARATUS                       │
└─────────────────────────────────────────┘

┌─────────────────────────────────────────┐ 130
│ ESTIMATE PROCESSING TIME FOR EACH SPLIT   │
│ MODEL BY SECOND ELECTRONIC APPARATUS      │
└─────────────────────────────────────────┘

┌─────────────────────────────────────────┐ 135
│ DETERMINE, BASED ON ESTIMATED             │
│ PROCESSING TIME, AT LEAST ONE SPLIT       │
│ MODEL WHICH SECOND ELECTRONIC             │
│ APPARATUS IS REQUESTED TO PROCESS         │
└─────────────────────────────────────────┘

REQUEST PROCESSING FOR
DETERMINED SPLIT MODEL
──────────────────────────────────► 140

┌─────────────────────────────────────────┐ 145
│ PROCESS SPLIT MODEL                        │
└─────────────────────────────────────────┘

TRANSMIT PROCESSING RESULT
◄─────────────────────────────────── 150

┌─────────────────────────────────────────┐ 155
│ PROCESS AI MODEL BASED ON                 │
│ PROCESSING RESULT                          │
└─────────────────────────────────────────┘

FIG. 2

# FIG. 3

1000

| 1100 | USER INPUT UNIT |
| 1300 | PROCESSOR |
| 1500 | COMMUNICATOR |

**USER INPUT UNIT** — 1100

**PROCESSOR** — 1300

**1000**

**COMMUNICATOR** — 1500

**NEAR FIELD COMMUNICATION UNIT** — 1510

| Bluetooth | BLE |
| NFC/RFID | WLAN |
| ZIGBEE | Ant+ |
| Wi-Fi Direct | UWB |

**MOBILE COMMUNICATION UNIT** — 1520

**BROADCAST RECEIVING UNIT** — 1530

**OUTPUT UNIT** — 1200

**DISPLAY UNIT** — 1210

**SOUND OUTPUT UNIT** — 1220

**VIBRATION MOTOR** — 1230

**A/V INPUT UNIT** — 1600

**CAMERA** — 1610

**MICROPHONE** — 1620

**SENSING UNIT** — 1400

**GEOMAGNETIC SENSOR** — 1410

**LOCATION SENSOR** — 1460

**ACCELERATION SENSOR** — 1420

**BAROMETRIC PRESSURE SENSOR** — 1470

**TEMPERATURE/ HUMIDITY SENSOR** — 1430

**PROXIMITY SENSOR** — 1480

**INFRARED SENSOR** — 1440

**RGB SENSOR** — 1490

**GYROSCOPE SENSOR** — 1450

**MEMORY** — 1700

**UI MODULE** — 1710

**TOUCH SCREEN MODULE** — 1720

**NOTIFICATION MODULE** — 1730

EP 4 209 966 A1

# FIG. 4

2000

**COMMUNICATOR** — 2500

**NEAR FIELD COMMUNICATION UNIT** — 2510
- Bluetooth
- BLE
- NFC/RFID
- WLAN
- ZIGBEE
- Ant+
- Wi-Fi Direct
- UWB

**MOBILE COMMUNICATION UNIT** — 2520

**BROADCAST RECEIVING UNIT** — 2530

**A/V INPUT UNIT** — 2600
- CAMERA — 2610
- MICROPHONE — 2620

**MEMORY** — 2700
- UI MODULE — 2710
- TOUCH SCREEN MODULE — 2720
- NOTIFICATION MODULE — 2730

**PROCESSOR** — 2300

**USER INPUT UNIT** — 2100

**OUTPUT UNIT** — 2200
- DISPLAY UNIT — 2210
- SOUND OUTPUT UNIT — 2220
- VIBRATION MOTOR — 2230

**SENSING UNIT** — 2400
- GEOMAGNETIC SENSOR — 2410
- LOCATION SENSOR — 2460
- ACCELERATION SENSOR — 2420
- BAROMETRIC PRESSURE SENSOR — 2470
- TEMPERATURE/HUMIDITY SENSOR — 2430
- PROXIMITY SENSOR — 2480
- INFRARED SENSOR — 2440
- RGB SENSOR — 2490
- GYROSCOPE SENSOR — 2450

# FIG. 5

OBTAIN PERFORMANCE INFORMATION
OF SECOND ELECTRONIC APPARATUS —510

OBTAIN PLURALITY OF SPLIT MODELS
BY SPLITTING AI MODEL —520

ESTIMATE PROCESSING TIME FOR EACH
OF SPLIT MODELS TO BE PROCESSED BY
SECOND ELECTRONIC APPARATUS, BASED ON —530
PERFORMANCE INFORMATION

DETERMINE, BASED ON PROCESSING TIME,
SPLIT MODEL WHICH SECOND ELECTRONIC —540
APPARATUS IS REQUESTED TO PROCESS

REQUEST SECOND ELECTRONIC APPARATUS
TO PERFORM DISTRIBUTED PROCESSING —550
ON AI MODEL

# FIG. 6

RECEIVE PROCESSING REQUEST FOR AT LEAST ONE
SPLIT MODEL FROM FIRST ELECTRONIC APPARATUS
BASED ON PROCESSING TIME FOR EACH SPLIT MODEL
ESTIMATED BASED ON PERFORMANCE INFORMATION
OF SECOND ELECTRONIC APPARATUS ——610

PROCESS AT LEAST ONE SPLIT MODEL ——620

TRANSMIT RESULT OF PROCESSING OF AT LEAST ONE
SPLIT MODEL TO FIRST ELECTRONIC APPARATUS ——630

# FIG. 7

# FIG. 8

# FIG. 9

# FIG. 10

3000

1000
FIRST
ELECTRONIC
APPARATUS

2000
SECOND
ELECTRONIC
APPARATUS

1010
START
PROCESSING

1030
START
PROCESSING

1020
TRANSMIT PROCESSING REQUEST

TRANSMIT PROCESSING RESULT (TRANSMISSION FAILURE)

TRANSMIT PROCESSING REQUEST

1040

1050

1060
TRANSMIT PROCESSING RESULT

1060-2

1060-1

1070-2

1070
TRANSMIT PROCESSING RESULT

1070-1

1
2
3
4
5
6
7
8
9

6
7
8
9

3
4
5
6
7
8
9

# FIG. 11

# FIG. 12

EP 4 209 966 A1

| | INTERNATIONAL SEARCH REPORT | International application No. |
|---|---|---|
| | | **PCT/KR2021/013527** |

**A. CLASSIFICATION OF SUBJECT MATTER**

**G06N 3/04**(2006.01)i; **G06N 3/08**(2006.01)i

According to International Patent Classification (IPC) or to both national classification and IPC

**B. FIELDS SEARCHED**

Minimum documentation searched (classification system followed by classification symbols)

G06N 3/04(2006.01); G06F 13/00(2006.01); G06F 3/048(2006.01); G06F 9/50(2006.01); G06N 3/063(2006.01); G06N 3/08(2006.01); G06N 7/00(2006.01); G06N 99/00(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인공지능(artificial intelligence), 분산 처리(distributed process), 시간(time), 모델 (model), 중복(duplication), 성능(performance)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0023239 A (SAMSUNG ELECTRONICS CO., LTD.) 04 March 2020 (2020-03-04)<br>See paragraphs [0102], [0104], [0108] and [0148]; claims 1, 4 and 8; and figure 6. | 1,3-8,10-13,15 |
| Y | | 2,9,14 |
| Y | US 2020-0042362 A1 (EMC IP HOLDING COMPANY LLC) 06 February 2020 (2020-02-06)<br>See claims 1-2. | 2 |
| Y | JP 2008-003709 A (MITSUBISHI ELECTRIC CORP.) 10 January 2008 (2008-01-10)<br>See claim 1. | 9,14 |
| A | US 2020-0111030 A1 (CISCO TECHNOLOGY, INC.) 09 April 2020 (2020-04-09)<br>See paragraphs [0119]-[0123]; and figure 8. | 1-15 |
| A | KR 10-2019-0113928 A (GOOGLE LLC) 08 October 2019 (2019-10-08)<br>See paragraphs [0045]-[0061]; and figure 3. | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 January 2022** | **17 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT

Information on patent family members

International application No.

**PCT/KR2021/013527**

| Patent document cited in search report | | | Publication date (day/month/year) | Patent family member(s) | | | Publication date (day/month/year) |
|---|---|---|---|---|---|---|---|
| KR | 10-2020-0023239 | A | 04 March 2020 | CN | 112585624 | A | 30 March 2021 |
| | | | | EP | 3794517 | A1 | 24 March 2021 |
| | | | | US | 2020-0065671 | A1 | 27 February 2020 |
| | | | | WO | 2020-040599 | A1 | 27 February 2020 |
| US | 2020-0042362 | A1 | 06 February 2020 | CN | 110795228 | A | 14 February 2020 |
| JP | 2008-003709 | A | 10 January 2008 | None | | | |
| US | 2020-0111030 | A1 | 09 April 2020 | None | | | |
| KR | 10-2019-0113928 | A | 08 October 2019 | CN | 110268422 | A | 20 September 2019 |
| | | | | EP | 3559868 | A1 | 30 October 2019 |
| | | | | JP | 2020-512639 | A | 23 April 2020 |
| | | | | JP | 6790286 | B2 | 25 November 2020 |
| | | | | KR | 10-2208989 | B1 | 28 January 2021 |
| | | | | US | 10692003 | B2 | 23 June 2020 |
| | | | | US | 2019-0303761 | A1 | 03 October 2019 |
| | | | | US | 2020-0279163 | A1 | 03 September 2020 |
| | | | | WO | 2018-175972 | A1 | 27 September 2018 |

Form PCT/ISA/210 (patent family annex) (July 2019)